(19) Europäisches Patentamt
European Patent Office
Office européen des brevets

(11) **EP 1 992 877 B1**

(12) **EUROPÄISCHE PATENTSCHRIFT**

(45) Veröffentlichungstag und Bekanntmachung des Hinweises auf die Patenterteilung:
**15.10.2014 Patentblatt 2014/42**

(21) Anmeldenummer: **08004939.8**

(22) Anmeldetag: **17.03.2008**

(51) Int Cl.:
*F23N 5/02* (2006.01)     *F23N 5/24* (2006.01)
*B60H 1/22* (2006.01)

(54) **Verfahren zur Flammüberwachung bei einem brennstoffbetriebenen Heizgerät**

Method for monitoring flames in a fuel-powered heating device

Procédé de surveillance de flamme dans un appareil de chauffage combustible

(84) Benannte Vertragsstaaten:
**DE FR GB**

(30) Priorität: **16.05.2007 DE 102007022938**

(43) Veröffentlichungstag der Anmeldung:
**19.11.2008 Patentblatt 2008/47**

(73) Patentinhaber: **Eberspächer Climate Control Systems GmbH & Co. KG**
**73730 Esslingen (DE)**

(72) Erfinder: **Blaschke, Walter**
**73779 Deizisau (DE)**

(74) Vertreter: **Ruttensperger, Bernhard et al**
**Weickmann & Weickmann**
**Patentanwälte**
**Postfach 86 08 20**
**81635 München (DE)**

(56) Entgegenhaltungen:
**EP-A1- 0 346 829     EP-A2- 0 892 215**
**DE-A1- 19 524 260     US-A- 5 788 148**

**Beschreibung**

Die vorliegende Erfindung betrifft ein Verfahren zur Flammüberwachung bei einem brennstoffbetriebenen Heizgerät, insbesondere Fahrzeugheizgerät, welches Heizgerät einen mit Brennstoff und Verbrennungsluft versorgten Brennerbereich sowie einen Abgastemperatursensor zur Bereitstellung eines die Abgastemperatur der bei der Verbrennung im Brennerbereich entstehenden Abgase repräsentierenden Abgastemperaturwertes aufweist.

Bei in Fahrzeugen beispielsweise als Standheizungen oder Zuheizer eingesetzten Heizgeräten wird der Verbrennungsstatus überwacht, um insbesondere dann, wenn ein Flammabbruch auftritt, durch sofortige Beendingung der Brennstoffzufuhr dafür zu sorgen, dass eine Übersättigung beispielsweise eines porösen Verdampfermediums in einer Brennkammer vermieden wird und somit für einen Neustart der Verbrennung bessere Bedingungen geschaffen werden. Hierzu wird beispielsweise die Abgastemperatur der bei der Verbrennung entstehenden Abgase überwacht. Fällt diese Temperatur unter einen fest vorgegebenen Schwellenwert, so wird darauf geschlossen, dass die Verbrennung zum Erliegen gekommen ist bzw. die Verbrennung in einen kritischen Zustand gelangt ist, bei welchem die Gefahr des Erlöschens der Flamme besteht. Sobald dieser Zustand erkannt wird, können Maßnahmen ergriffen werden, die entweder der Tendenz der absterbenden Flamme entgegenwirken, oder, wie bereits erwähnt, die sofortige Beendigung der Brennstoffzufuhr in Vorbereitung eines Neustarts umfassen können.

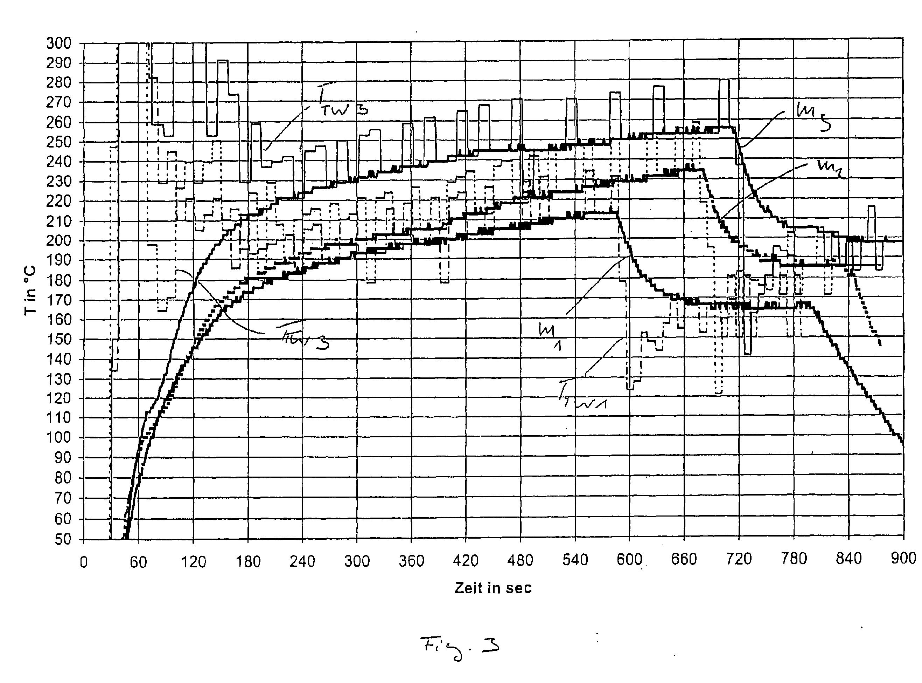

Bei dieser bekannten Vorgehensweise des Vergleichs der Abgastemperatur mit einer Flammabbruchsschwelle besteht das grundsätzliche Problem, dass auch an sich baugleiche Heizgeräte hinsichtlich der im Betrieb dann tatsächlich auftretenden Zustände erheblich variieren. Dies zeigt die Fig. 3 mit den drei jeweils mit dicker Linie eingezeichneten Messkurven $m_1$, $m_2$ und $m_3$. Diese Messkurven repräsentieren am Anfang des Betreibens eines derartigen Fahrzeugheizgerätes die Temperatur des Abgasstroms bei an sich baugleichen Heizgeräten bzw. Brennkammern. Man erkennt, dass bereits beim Anstieg der Temperatur in der Startphase, in welcher im Allgemeinen ein derartiges Heizgerät mit der maximal möglichen Heizleistung betrieben wird, also die für die Heizleistungsstufe mit größter Heizleistung vorgesehene Brennstoffmenge und Verbrennungsluftmenge eingespeist werden, die drei Kurven $m_1$, $m_2$ und $m_3$ derart weit auseinander laufen, dass Temperaturunterschiede von nahezu 50°C auftreten. Diese durch diese Kurven bzw. die Differenzen repräsentierten Abweichungen werden auch mitbeeinflusst dadurch, dass zwar grundsätzlich baugleiche, jedoch nicht zu exakt den gleichen Messwerten führende Temperaturfühler eingesetzt werden. Auch nach Beendigung der Startphase und Übergang in den normalen Betrieb, der beispielsweise repräsentiert ist durch den Übergang in eine Heizleistungsstufe mit geringerer Heizleistung, laufen die Kurven $m_1$, $m_2$ und $m_3$ deutlich auseinander. Dieser Übergang tritt bei der Kurve $m_1$ etwa bei 580 Sekunden auf. Bei der Kurve $m_2$ tritt er etwa bei 680 Sekunden auf, während er bei der Kurve $m_3$ bei etwa 710 Sekunden auftritt. Einhergehend mit dem Absenken der Heizleistung bzw. dem Absenken der Brennstoffzuführmenge und der Verbrennungsluftzuführmenge wird durch die geringere Wärmeenergiemenge, die bei der Verbrennung freigesetzt wird, auch der Abfall in der Abgastemperatur erkennbar.

Wenn bei derartigen Geräten mit in Zuordnung zu einem bestimmten Gerätetyp ausgewählten Schwellenwerten gearbeitet wird, um beispielsweise den Flammabbruch zu erkennen, so muss also darauf geachtet werden, dass im gesamten im Vorversuch zu ermittelnden Streuspektrum auftretende Werte der Abgastemperatur nicht zu einer fehlerhaften Einschätzung des Verbrennungszustands führen können. Dies bedeutet, dass beispielsweise im Falle der drei in Fig. 3 gezeigten Messkurven ein Schwellenwert bei einem sehr niedrigen Temperaturwert anzusetzen wäre, beispielsweise bei 130°C bis 140°C, was vor allem dann, wenn in der Startphase ein derartiger Flammabbruch auftritt, zu einer erheblichen Verzögerung bei der Erfassung dieses Zustands führen wird.

Aus der EP 0 346 829 A1 ist es bekannt, bei einem Fahrzeugheizgerät auf der Grundlage einer Temperaturänderungsgeschwindigkeit in einer Brennkammer oder an einem Wärmetauscher durch Vergleich mit einem Vorgabewert festzustellen, ob ein Flammabbruch vorliegt oder nach dem Starten des Brenners die Zündung erfolgt ist und somit eine Flamme erzeugt wurde.

Die DE 195 24 260 A1 offenbart zur Überhitzungssicherung bei einem Fahrzeugheizgerät die Überwachung des Temperaturanstiegs im Bereich eines Gasmantels. Die jeweils ermittelte Temperatur bzw. eine Änderungsrate derselben wird mit Schwellen für einen Temperaturgradienten verglichen. Bei Überschreiten dieser Schwellen wird eine den Brennstoff fördernde Dosierpumpe stillgesetzt, um den Verbrennungsprozess in einer Brennkammer zu beenden.

Es ist die Aufgabe der vorliegenden Erfindung, ein Verfahren zur Flammüberwachung bei einem brennstoffbetriebenen Heizgerät, insbesondere Fahrzeugheizgerät, vorzusehen, mit welchem schnell und in zuverlässiger Art und Weise auf den Flammstatus bzw. die Wärmeentwicklung im Bereich des Fahrzeugheizgerätes geschlossen werden kann.

Gemäß einem ersten Aspekt der vorliegenden Erfindung wird diese Aufgabe gelöst durch ein Verfahren zur Flammüberwachung bei einem brennstoffbetriebenen Heizgerät, insbesondere Fahrzeugheizgerät, welches Heizgerät einen mit Brennstoff und Verbrennungsluft versorgten Brennerbereich sowie einen Abgastemperatursensor zur Bereitstellung eines die Abgastemperatur der bei der Verbrennung im Brennerbereich entstehenden Abgase repräsentierenden Abgastemperaturwertes aufweist, wobei das Verfahren zur Flammüberwachung ein Verfahren zur Flammabbruchüberwachung ist und folgende Maßnahmen umfasst:

a) in einer Startphase, wiederholtes Ermitteln einer Flammabbruchsschwelle, beruhend auf dem wiederholt bereitgestellten Abgastemperaturwert und einem ersten Schwellendifferenzwert,

b) in einer an die Startphase anschließenden Betriebsphase, Ermitteln der Flammabbruchsschwelle beruhend auf einem am Ende der Startphase vorhandenen Abgastemperaturwert oder dem in der Startphase aufgetretenen höchsten Abgastemperaturwert als Temperaturreferenzwert, dem ersten Schwellendifferenzwert und einem ersten Leistungsstufendifferenzwert, wobei der erste Leistungsstufendifferenzwert in Abhängigkeit von der in der Betriebsphase eingestellten Heizleistungsstufe ausgewählt wird,

c) Vergleichen eines Temperaturvergleichswertes mit der Flammabbruchsschwelle,

d) dann, wenn der Temperaturvergleichswert die Flammabbruchsschwelle erreicht oder unterschreitet, Erkennen eines Flammabbruchs oder eines bevorstehenden Flammabbruchs.

Bei der erfindungsgemäßen Vorgehensweise wird also zunächst in der Startphase mit einer zusammen mit der Temperatur der Verbrennungsabgase sich entwickelnden Flammabbruchsschwelle gearbeitet. Dies heißt, die Schwelle wird der in dieser Phase allgemein stetig ansteigenden Temperatur nachgeführt, so dass auch in der Startphase bereits mit einer vergleichsweise nahe an den tatsächlichen auftretenden Temperaturen liegenden Schwelle gearbeitet wird. Nach dem Übergang in einen normalen Betrieb wird dann mit einer Flammabbruchsschwelle gearbeitet, die einerseits abhängig ist von einem in der Startphase ermittelten Temperaturreferenzwert, also einem Wert, der in dieser Phase und in Zuordnung mit einem ganz bestimmten Gerät ermittelt worden ist. Dies stellt sicher, dass auch im nachfolgenden Betrieb die Flammabbruchsschwelle unter Berücksichtigung der tatsächlichen Gegebenheiten innerhalb eines Gerätes bestimmt bzw. festgesetzt werden kann. Zusätzlich wird dabei auch noch berücksichtigt, in welcher Leistungsstufe das Heizgerät zu betreiben ist, da selbstverständlich verschiedene Leistungsstufen zu verschiedenen Wärmeentwicklungen führen und mithin auch dafür gesorgt werden kann, dass in diesen verschiedenen Leistungsstufen die Flammabbruchsschwelle möglichst nahe an den tatsächlichen Temperaturen liegt, jedoch noch so weit davon entfernt, dass eine fehlerhafte Erkennung eines Flammabbruchs oder eines bevorstehenden Flammabbruchs vermieden werden kann.

Beispielsweise kann in der Startphase die Flammabbruchsschwelle ermittelt werden als:

$$S_F = T_A - \Delta T_F$$

wobei

$S_F$ = Flammabbruchsschwelle
$T_A$ = Abgastemperaturwert
$\Delta T_F$ = erster Schwellendifferenzwert.

In der Betriebsphase kann die Flammabbruchsschwelle ermittelt werden als

$$S_F = T_R - \Delta T_F - \Delta T_{FL}$$

wobei

$S_F$ = Flammabbruchsschwelle
$T_R$ = Temperaturreferenzwert
$\Delta T_F$ = erster Schwellendifferenzwert
$\Delta T_{FL}$ = erster Leistungsstufendifferenzwert.

Gemäß einem weiteren besonders vorteilhaften Aspekt wird vorgeschlagen, dass dann, wenn ein Übergang von einer Heizleistungsstufe mit niedrigerer Heizleistung zu einer Heizleistungsstufe mit höherer Heizleistung stattfindet, die Flammabbruchsschwelle erst nach Ablauf eines ersten Verzögerungszeitintervalls nach dem Übergang in die Heizleistungsstufe mit höherer Heizleistung auf einen für die Heizleistungsstufe mit höherer Heizleistung vorgegebenen Wert gesetzt wird. Auf diese Art und Weise kann vermieden werden, dass durch ein spontanes Verändern der Flammabbruchsschwelle diese plötzlich über dem zum Zeitpunkt der Veränderung der Schwelle vorhandenen Abgastemperaturwert liegt und somit in fehlerhafter Weise auf das Vorliegen eines Flammabbruchs erkannt werden würde.

Gemäß einem weiteren Aspekt der vorliegenden Erfindung wird die eingangs genannte Aufgabe gelöst durch ein Verfahren zur Flammüberwachung bei einem brennstoffbetriebenen Heizgerät, insbesondere Fahrzeugheizgerät, welches Heizgerät einen mit Brennstoff und Verbrennungsluft versorgten Brennerbereich sowie einen Abgastemperatursensor zur Bereitstellung eines die Abgastemperatur der bei der Verbrennung im Brennerbereich entstehenden Abgase repräsentierenden Abgastemperaturwertes aufweist, wobei das Verfahren zur Flammüberwachung ein Verfahren zur Flammabbruchüberwachung ist und folgende Maßnahmen umfasst:

a) in einer Startphase und einer ersten Betriebsphase, in welcher die Heizleistung höher ist, als in einer vorangehenden Phase, wiederholtes Ermitteln einer Flammabbruchsschwelle beruhend auf dem wiederholt bereitgestellten Abgastemperaturwert und einem ersten Schwellendifferenzwert,

b) in einer zweiten Betriebsphase, in welcher die Heizleistung kleiner ist, als in einer vorangehenden Phase, Ermitteln der Flammabbruchsschwelle beruhend auf einem am Ende der Startphase vorhandenen Abgastemperaturwert oder dem in der Startphase aufgetretenen höchsten Abgastemperaturwert als Temperaturreferenzwert, dem ersten Schwellendifferenzwert und einem ersten Leistungsstufendifferenzwert, wobei der erste Leistungsstufendifferenzwert in Abhängigkeit von der in der Betriebsphase eingestellten Heizleistungsstufe ausgewählt wird,

c) Vergleichen eines Temperaturvergleichswertes mit der Flammabbruchsschwelle,

d) dann, wenn der Temperaturvergleichswert die Flammabbruchsschwelle erreicht oder unterschreitet, Erkennen eines Flammabbruchs oder eines bevorstehenden Flammabbruchs.

Bei dieser Vorgehensweise wird also dafür gesorgt, dass immer dann, wenn mit einer Heizleistung bzw. einer Heizleistungsstufe zu arbeiten ist, die höher ist, als in einer vorangehenden Phase, was sowohl für die Startphase gilt, bei welcher in der vorangehenden Phase die Heizleistung Null war, als auch für jede erste Betriebsphase, welcher eine zweite Betriebsphase vorangegangen ist, in der eine geringere Heizleistung ausgewählt war, die Flammabbruchsschwelle der Temperaturentwicklung nachgeführt wird, im Allgemeinen also mit bestimmtem Abstand der Temperatur des Abgasstroms folgt. In einer jeweiligen zweiten Betriebsphase, in welcher auf Grund der Tatsache, dass bei dieser eine geringere Heizleistung vorliegt, als in einer vorangehenden ersten Betriebsphase, allgemein die Temperatur sinken sollte, wird mit einer im Wesentlichen unveränderlichen und auf den Temperaturreferenzwert bezogenen Flammabbruchsschwelle gearbeitet. Auf diese Art und Weise können Probleme beim Umschalten von einer Heizleistungsstufe mit geringerer Heizleistung auf eine Heizleistungsstufe mit höherer Heizleistung insofern, als die Beziehung zwischen der dann vorhandenen Flammabbruchsschwelle und dem momentan vorliegenden Abgastemperaturwert betroffen ist, vermieden werden.

Auch bei dieser Vorgehensweise kann vorgesehen sein, dass in der Startphase oder/und der bzw. jeder ersten Betriebsphase die Flammabbruchsschwelle ermittelt wird als:

$$S_F = T_A - \Delta T_F$$

wobei

$S_F$ = Flammabbruchsschwelle
$T_A$ = Abgastemperaturwert
$\Delta T_F$ = erster Schwellendifferenzwert.

In der bzw. jeder zweiten Betriebsphase kann die Flammabbruchsschwelle ermittelt werden als

$$S_F = T_R - \Delta T_F - \Delta T_{FL}$$

wobei

$S_F$ = Flammabbruchsschwelle
$T_R$ = Temperaturreferenzwert
$\Delta T_F$ = erster Schwellendifferenzwert
$\Delta T_{FL}$ = erster Leistungsstufendifferenzwert.

Es sei in diesem Zusammenhang noch einmal betont, dass die Bezeichnung als "erste Betriebsphase" und "zweite Betriebsphase" tatsächlich nicht in zeitlicher Hinsicht zu sehen ist, sondern lediglich zwei unterschiedliche Arten von Betriebsphasen klassifiziert sind, die sich dadurch unterscheiden, dass der als erste Betriebsphase bezeichneten Betriebsphase eine höhere Heizleistung vorliegt bzw. gefordert wird, als in einer vorangehenden, als zweite Betriebsphase bezeichneten Betriebsphase.

Auch in der Startphase bzw. einer ersten Betriebsphase, in welcher an sich die Abgastemperatur ansteigen sollte und möglicherweise am Ende dieser Phase in einen Sättigungsbereich übergehen sollte, kann es auf Grund äußerer Einflüsse vorkommen, dass die Abgastemperatur bzw. der diese repräsentierende Abgastemperaturwert zumindest kurzzeitig absinkt. Da dieses Absinken jedoch auch bedingt sein könnte durch einen Flammabbruch wird gemäß einem weiteren Aspekt vorgeschlagen, dass in der Startphase bzw. der bzw. jeder ersten Betriebsphase dann, wenn der Abgastemperaturwert sinkt, die Flammabbruchsschwelle nicht gesenkt wird.

Dies bedeutet, dass zwar in dieser Phase die Flammabbruchsschwelle mit dem Abgastemperaturwert ansteigt, sofern, dieser Wert ansteigt, jedoch nicht absinken kann, also immer zumindest auf einem bereits erreichten Niveau verbleibt.

Um weiterhin sicherzustellen, dass beispielsweise Probleme bei der Temperaturerfassung nicht dazu führen können, dass ein Flammabbruch überhaupt nicht erkannt werden kann, wird vorgeschlagen, dass für die Flammabbruchsschwelle ein unterer Schwellengrenzwert vorgegeben wird, und dass die Flammabbruchsschwelle nicht unter den unteren Schwellengrenzwert gesenkt wird.

Bei einer besonders einfach zu realisierenden Ausgestaltungsform kann der erste Schwellendifferenzwert unveränderbar sein. Alternativ ist es jedoch auch möglich, diesen ersten Schwellendifferenzwert in Abhängigkeit von dem Abgastemperaturwert oder/und der Heizleistungsstufe variabel zu gestalten. Weiterhin kann in der Startphase bzw. der bzw. jeder ersten Betriebsphase der Abgastemperaturwert und mithin auch die Flammabbruchsschwelle mit vorbestimmter Wiederholungsrate ermittelt werden, wobei diese Wiederholungsrate so gewählt werden sollte, dass mit den in dieser Phase zu erwartenden Temperaturveränderungen eine entsprechend exakte Nachführung der Flammabbruchsschwelle möglich ist.

Gemäß einem weiteren Aspekt wird die eingangs genannte Aufgabe gelöst durch ein Verfahren zur Flammüberwachung bei einem brennstoffbetriebenen Heizgerät, insbesondere Fahrzeugheizgerät, welches Heizgerät einen mit Brennstoff und Verbrennungsluft versorgten Brennerbereich sowie einen Abgastemperatursensor zur Bereitstellung eines die Abgastemperatur der bei der Verbrennung im Brennerbereich entstehenden Abgase repräsentierenden Abgastemperaturwertes aufweist, wobei das Verfahren zur Flammüberwachung ein Verfahren zur Überhitzungsüberwachung ist und folgende Maßnahmen umfasst:

a) in einer Startphase, wiederholtes Ermitteln einer Überhitzungsschwelle beruhend auf dem wiederholt bereitgestellten Abgastemperaturwert und einem zweiten Schwellendifferenzwert,
b) in einer an die Startphase anschließenden Betriebsphase, Ermitteln der Überhitzungsschwelle beruhend auf einem am Ende der Startphase vorhandenen Abgastemperaturwert ($T_A$) oder dem in der Startphase aufgetretenen höchsten Abgastemperaturwert als Temperaturreferenzwert und dem zweiten Schwellendifferenzwert,
c) Vergleichen eines Temperaturvergleichswertes mit der Überhitzungsschwelle,
d) dann, wenn der Temperaturvergleichswert die Überhitzungsschwelle (So) erreicht oder überschreitet, Erkennen einer Überhitzung oder einer bevorstehenden Überhitzung.

Bei dieser Vorgehensweise wird die Überhitzungsschwelle also zunächst in der Startphase bei ansteigender Temperatur des Abgasstroms mit diesem Abgastemperaturwert mitgeführt. Nach Beendigung der Startphase, in welcher im Allgemeinen auch die höchste Temperatur des Abgasstroms erreicht wird, wird dann die Überhitzungsschwelle beruhend auf dieser in der Startphase ermittelten höchsten Temperatur und einem vorbestimmten Sicherheitsabstand, also dem zweiten Schwellendifferenzwert, auf einem somit unveränderlichen Wert beibehalten.

Dabei kann weiter vorgesehen sein, dass bei der Maßnahme b) die Überhitzungsschwelle ferner beruhend auf einem zweiten Leistungsstufendifferenzwert ermittelt wird, wobei der zweite Leistungsstufendifferenzwert in Abhängigkeit von der in der Betriebsphase eingestellten Heizleistungsstufe ausgewählt wird.

Ebenso wie bei der Erkennung eines Flammabbruchs kann also auch für die Erkennung eines Überhitzungszustands, der beispielsweise bedingt sein kann durch eine zu geringe Wärmeabfuhr aus dem Brennerbereich, mit einer an den Temperaturverlauf angepassten Überhitzungsschwelle gearbeitet werden. Auch diese kann zunächst in der Startphase mit der Temperatur der Abgase mitgeführt werden und dann in einem folgenden Betrieb unter Berücksichtigung der in dieser Startphase tatsächlich erfassten Werte vorgegeben werden.

In der Startphase kann die Überhitzungsschwelle ermittelt werden als:

$$S_{\ddot{U}} = T_A + \Delta T_{\ddot{U}}$$

wobei

$S_{\ddot{U}}$ = Überhitzungsschwelle
$T_A$ = Abgastemperaturwert
$\Delta T_{\ddot{U}}$ = zweiter Schwellendifferenzwert.

In der Betriebsphase kann die Überhitzungsschwelle ermittelt werden als:

$$S_{\ddot{U}} = T_R + \Delta T_{\ddot{U}} - \Delta T_{\ddot{U}L}$$

wobei

$S_F$ = Überhitzungsschwelle
$T_R$ = Temperaturreferenzwert
$\Delta T_{\ddot{U}}$ = zweiter Schwellendifferenzwert
$\Delta T_{\ddot{U}L}$ = zweiter Leistungsstufendifferenzwert.

Gemäß einem weiteren vorteilhaften Aspekt wird vorgeschlagen, dass dann, wenn ein Übergang von einer Heizleistungsstufe mit höherer Heizleistung zu einer Heizleistungsstufe mit niedrigerer Heizleistung stattfindet, die Überhitzungsschwelle erst nach Ablauf eines zweiten Verzögerungszeitintervalls nach dem Übergang in die Heizleistungsstufe mit niedrigerer Heizleistung auf einen für die Heizleistungsstufe mit niedrigerer Heizleistung vorgesehenen Wert gesetzt wird.

Gemäß einem weiteren Aspekt der vorliegenden Erfindung wird die eingangs genannte Aufgabe gelöst durch ein Verfahren zur Flammüberwachung bei einem brennstoffbetriebenen Heizgerät, insbesondere Fahrzeugheizgerät, welches Heizgerät einen mit Brennstoff und Verbrennungsluft versorgten Brennerbereich sowie einen Abgastemperatursensor zur Bereitstellung eines die Abgastemperatur der bei der Verbrennung im Brennerbereich entstehenden Abgase repräsentierenden Abgastemperaturwertes aufweist, wobei das Verfahren zur Flammüberwachung ein Verfahren zur Überhitzungsüberwachung ist und folgende Maßnahmen umfasst:

a) in einer Startphase und einer zweiten Betriebsphase, in welcher die Heizleistung kleiner ist, als in einer vorangehenden Phase, wiederholtes Ermitteln einer Überhitzungsschwelle beruhend auf dem wiederholt bereitgestellten Abgastemperaturwert und einem zweiten Schwellendifferenzwert,

b) in einer ersten Betriebsphase, in welcher die Heizleistung höher ist, als in einer vorangehenden Phase, Ermitteln der Überhitzungsschwelle beruhend auf einem am Ende der Startphase vorhandenen Abgastemperaturwert oder dem in der Startphase aufgetretenen höchsten Abgastemperaturwert als Temperaturreferenzwert, dem zweiten Schwellendifferenzwert und einem zweiten Leistungsstufendifferenzwert, wobei der zweite Leistungsstufendifferenzwert in Abhängigkeit von der in der Betriebsphase eingestellten Heizleistungsstufe ausgewählt wird,

c) Vergleichen eines Temperaturvergleichswertes mit der Überhitzungsschwelle,

d) dann, wenn der Temperaturvergleichswert die Überhitzungsschwelle erreicht oder überschreitet, Erkennen einer Überhitzung oder einer bevorstehenden Überhitzung.

Bei dieser Vorgehensweise wird also immer dann, wenn das Heizgerät in einem Zustand ist, in welchem auf Grund des Übergangs in eine Heizleistungsstufe mit geringerer Heizleistung, als in einer vorangehenden Phase, die Überhitzungsschwelle mit dem Abgastemperaturwert mitgeführt wird, selbstverständlich mit vorbestimmtem Abstand, um in einer derartigen Phase die Schwelle so nahe als möglich am Abgastemperaturwert zu haben.

Dabei kann beispielsweise vorgesehen sein, dass in der Startphase oder/und der bzw. jeder zweiten Betriebsphase die Überhitzungsschwelle ermittelt wird als:

$$S_{\ddot{U}} = T_A + \Delta T_{\ddot{U}}$$

wobei

So = Überhitzungsschwelle
$T_A$ = Abgastemperaturwert
$\Delta T_{\ddot{U}}$ = zweiter Schwellendifferenzwert.

In der bzw. jeder ersten Betriebsphase kann dann die Überhitzungsschwelle ermittelt werden als

$$S_{\ddot{U}} = T_R + \Delta T_{\ddot{U}} - \Delta T_{\ddot{U}L}$$

wobei

$S_F$ = Überhitzungsschwelle
$T_R$ = Temperaturreferenzwert

$\Delta T_{\ddot{U}}$ = zweiter Schwellendifferenzwert
$\Delta T_{\ddot{U}L}$ = zweiter Leistungsstufendifferenzwert.

Um sicherzustellen, dass dann, wenn das System in einer zweiten Betriebsphase ist, also auf Grund des Übergangs in eine Heizleistungsstufe mit geringerer Heizleistung an sich die Temperatur abfallen sollte, ein Anstieg bzw. vorübergehender Anstieg auch als hinsichtlich der Wärmeabfuhr kritisch erkannt werden kann, wird weiter vorgeschlagen, dass in einer zweiten Betriebsphase dann, wenn der Abgastemperaturwert ansteigt, die Überhitzungsschwelle nicht erhöht wird.

Für die Überhitzungsschwelle kann ein oberer Schwellengrenzwert vorgegeben werden, über welchen die Überhitzungsschwelle nicht erhöht wird. Der zweite Schwellendifferenzwert kann unveränderbar sein, kann jedoch auch in Abhängigkeit von dem Abgastemperaturwert oder/und der Heizleistungsstufe veränderbar sein. Weiterhin kann selbstverständlich auch bei der Überhitzungserkennung in der Startphase bzw. einer zweiten Betriebsphase der Abgastemperaturwert und mit diesem die Überhitzungsschwelle mit vorbestimmter Wiederholungsrate ermittelt werden.

Der mit dem jeweiligen Schwellenwert, also der Überhitzungsschwelle oder der Flammabbruchsschwelle, zu vergleichende Temperaturvergleichswert kann der Abgastemperaturwert selbst sein, kann jedoch auch ein Vergleichswert sein, der beruhend auf einer Entwicklung der Abgastemperatur bzw. des Abgastemperaturwertes ermittelt wird. Auf diese Art und Weise wird es möglich, bereits durch die Tendenz des Temperaturvergleichswertes einen Schluss auf möglicherweise zukünftig auftretende Entwicklungen zu ziehen, um auf diese Art und Weise einem Flammabbruch oder einer Überhitzung frühzeitig entgegenwirken zu können.

Beispielsweise kann vorgesehen sein, dass der Temperaturvergleichswert ermittelt wird als:

$$T_{TW} = T_A(n) + (T_A(n) - T_A(n-1)) \times B$$

wobei

$T_{TW}$ = Temperaturtendenzwert als Temperaturvergleichswert
$T_A(n)$ = Abgastemperaturwert bei Ermittlung n
$T_A(n-1)$ = Abgastemperaturwert bei Ermittlung n-1
B = Tendenzbewertungsfaktor.

Die vorliegende Erfindung wird nachfolgend mit Bezug auf die beiliegenden Figuren detailliert beschrieben. Es zeigt:

Fig. 1      eine Prinzipdarstellung eines erfindungsgemäß aufgebauten Fahrzeugheizgerätes;

Fig. 2      den zeitlichen Verlauf eines Abgastemperaturwertes und von diesem zugeordneten Schwellenwerten;

Fig. 3    den zeitlichen Verlauf des Abgastemperaturwertes, gemessen an verschiedenen Heizgeräten und in Zuordnung zu diesen Abgastemperaturwerten jeweils ermittelte Temperaturtendenzwerte;

Fig. 4    ein der Fig. 2 entsprechendes Diagramm für eine alternative Vorgehensweise.

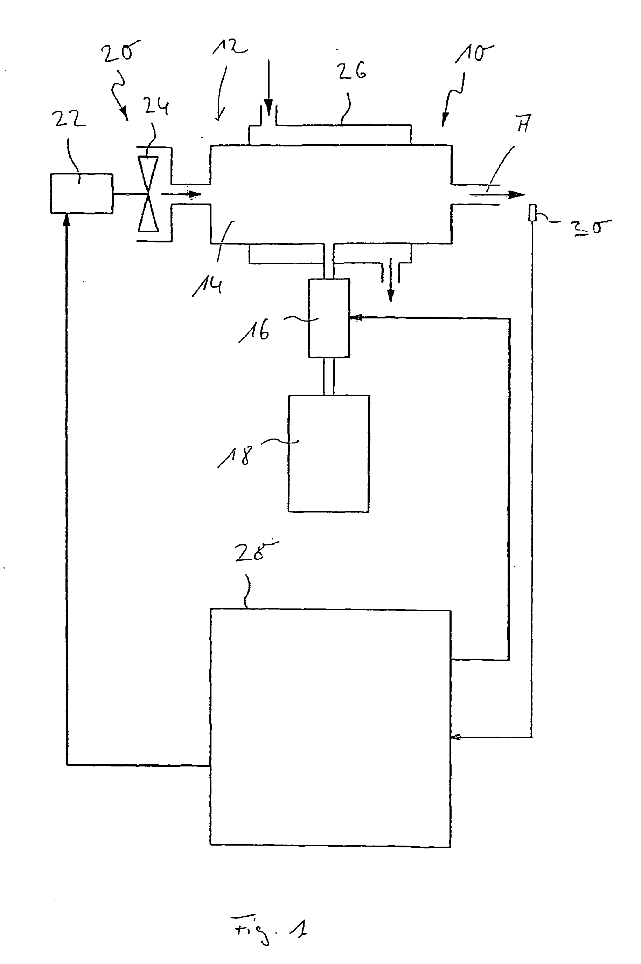

Die Fig. 1 zeigt in prinzipieller Darstellung ein Heizgerät 10, wie es beispielsweise als Standheizung oder Zuheizer in einem Fahrzeug eingesetzt werden kann. Das Heizgerät 10 umfasst einen Brennerbereich 12 mit einer Brennkammer 14. In dieser Brennkammer 14 wird durch eine Brennstoffzuführanordnung 16 flüssiger Brennstoff aus einem Reservoir 18 eingespeist. Die Brennstoffzuführanordnung 16 kann eine Dosierpumpe umfassen. Beispielsweise kann in der Brennkammer 14 ein poröses Verdampfermedium vorgesehen sein, was den flüssigen Brennstoff aufnimmt und ihn als Brennstoffdampf abgibt. Durch eine Verbrennungsluftzuführanordnung 20, welche beispielsweise einen Elektroantriebsmotor 22 und ein Förderrad 24 umfasst, wird Verbrennungsluft in die Brennkammer 14 eingespeist, dort mit dem Brennstoffdampf vermischt und verbrannt.

Die in der Brennkammer 14 entstehenden heißen Verbrennungsabgase durchströmen einen Wärmetauscherbereich 26 und treten dann als Abgasstrom A beispielsweise in ein Abgasführungssystem eines Fahrzeugs ein. Der Wärmetauscherbereich 26 wird durch ein zu erwärmendes Medium, beispielsweise das Kühlwasser einer Brennkraftmaschine oder aber auch in einen Fahrzeuginnenraum einzuleitende Luft durchströmt, so dass dieses Medium in den Verbrennungsabgasen transportierte Wärme aufnehmen kann.

Die verschiedenen Systembereiche des Heizgerätes 10 stehen unter der Ansteuerung einer Ansteuervorrichtung 28. Diese gibt Ansteuerbefehle aus, beispielsweise an die Brennstoffzuführanordnung 16 bzw. die Verbrennungsluftzuführanordnung 20, um jeweils in Zuordnung für einen momentan vorhandenen Wärmebedarf vorgegebene Heizleistungsstufen die erforderliche Brennstoffmenge bzw. Verbrennungsluftmenge zur Verbrennung bereitzustellen. Im Allgemeinen sind für derartige Heizgeräte 10 mehrere Heizleistungsstufen vorgegeben, zwischen welchen beispielsweise im Rahmen einer so genannten Zweipunktregelung umgeschaltet werden kann, um das zu erwärmende Medium bzw. einen zu erwärmenden Innenraum auf die gewünschte Temperatur zu bringen.

Man erkennt in Fig. 1 weiter einen Abgastemperatursensor 30, welcher die Temperatur des das Heizgerät 10 verlassenden Abgasstroms A erfasst bzw. ein entsprechendes Signal in die Ansteuervorrichtung 28 einspeist. Unter Berücksichtigung dieses Signals bzw.

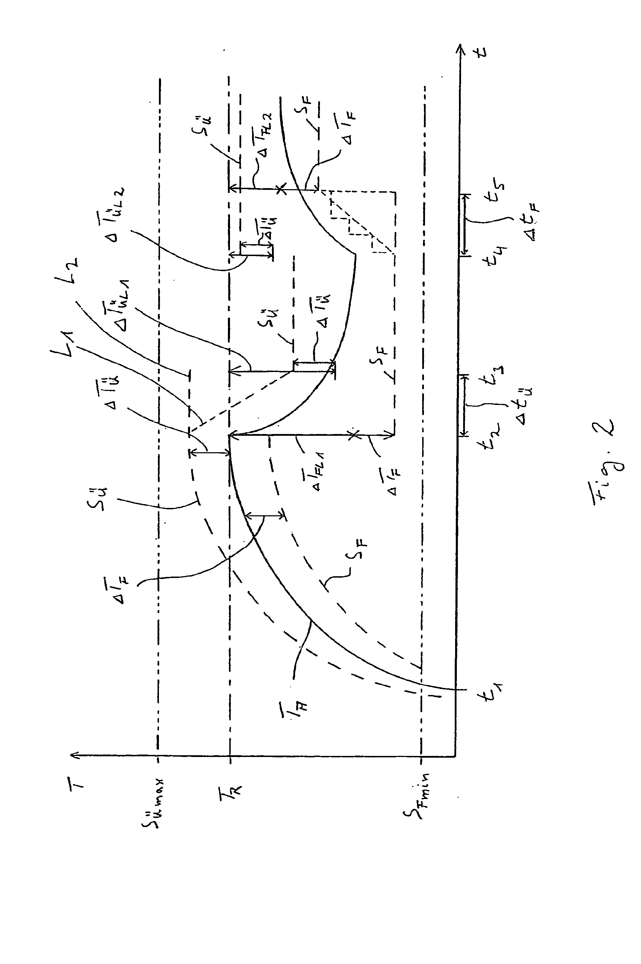

eines darauf beruhend generierten Abgastemperaturwertes kann die Ansteuervorrichtung 28, wie im Folgenden dargelegt, eine Flammüberwachung durchführen, um beispielsweise zu erkennen, ob ein Flammabbruch auftritt oder bevorsteht oder ob die Gefahr einer Überhitzung besteht. Dies wird nachfolgend unter Bezugnahme auf die Fig. 2 erläutert.

Die Fig. 2 zeigt ein Diagramm, in welchem über der Zeit aufgetragen eine als $T_A$ erkennbare Kurve wiedergegeben ist, welche den Abgastemperaturwert repräsentiert. Zu einem Zeitpunkt $t_1$ startet der Verbrennungsbetrieb durch entsprechende Ausgabe von Ansteuerbefehlen vermittels der Ansteuervorrichtung 28. Durch die ab dem Zeitpunkt $t_1$ also beginnende Startphase und die damit auch einhergehende Einspeisung von Brennstoff und Verbrennungsluft kann die Verbrennung gestartet werden, so dass allmählich auch die Temperatur der Verbrennungsabgase A bzw. allgemein der den Brennerbereich 12 verlassenden Gase ansteigt. In dieser Startphase werden eine Brennstoffzuführmenge bzw. eine Verbrennungsluftzuführmenge eingeleitet, wie sie normalerweise für diejenige Heizleistungsstufe vorgesehen sind, in welcher die größte Heizleistung bereitgestellt wird. Auf diese Art und Weise kann sichergestellt werden, dass die in diesem Zustand im Allgemeinen sehr kalten Systemkomponenten bzw. das im Allgemeinen auch vergleichsweise kalte zu erwärmende Medium möglichst rasch auf eine höhere Temperatur gebracht werden können, wie sie für den normalen Betrieb dann geeignet ist. Die Startphase dauert bis zu einem Zeitpunkt $t_2$ an.

Im Allgemeinen steigt in der Startphase der Abgastemperaturwert $T_A$ stetig an, wobei gegen Ende dieser Startphase der Anstieg vergleichsweise gering sein wird bzw. dieser Abgastemperaturwert $T_A$ näherungsweise unverändert bleibt. Zum Zeitpunkt $t_2$ wird dann ein Befehl zum Übergang in eine Heizleistungsstufe mit geringerer Heizleistung erzeugt. Dies kann in diesem Falle eine Heizleistungsstufe 1 sein, bei welcher eine sehr geringe bzw. die geringste Heizleistung bereitgestellt wird. Man erkennt den bedingt durch die geringere Brennstoffzuführmenge und Verbrennungsluftzuführmenge dann auftretenden Abfall des Abgastemperaturwertes $T_A$, der sich ebenfalls mehr oder weniger stetig vollzieht und sich auf einen für diese Heizleistungsstufe dann charakteristischen Wert zu bewegt. Zum Zeitpunkt $t_4$ wird ein Befehl zum Übergang in eine Heizleistungsstufe 2 ausgegeben, in welcher eine höhere Heizleistung bereitgestellt wird, als in der Heizleistungsstufe 1, jedoch eine geringere Heizleistung, als in der höchsten Heizleistungsstufe, wie sie in der Startphase, also bis zum Zeitpunkt $t_2$ gewählt war. Der Abgastemperaturwert $T_a$ steigt ab dem Zeitpunkt $t_4$ wieder an und konvergiert wieder in Richtung zu einem für diese Heizleistungsstufe 2 und die vorliegenden Umgebungsbedingungen charakteristischen Wert. Im folgenden Betrieb kann dann durch das alternierende Umschalten zwischen verschiedenen Heizleistungsstufen dafür gesorgt werden, dass für das zu erwärmende Medium eine mittlere Heizleistung bereitgestellt wird, die zu einer entsprechend mittleren, um einen Sollwert schwankenden Temperatur dieses Mediums führen kann.

Um bei einem derartigen Heizgerät 10 bzw. einem derart betriebenen Heizgerät 10 den Flammzustand überwachen zu können, werden zwei Schwellen definiert. Zum einen ist dies eine Flammabbruchsschwelle $S_F$. Zum anderen ist dies eine Überhitzungsschwelle $S_{\ddot{U}}$. Beide Schwellen werden, wie im Folgenden detailliert erläutert, so definiert, dass auch unter Berücksichtigung der Tatsache, dass über die Zeit hinweg verschiedene Heizleistungsstufen aktiv sind und somit grundsätzlich unterschiedliche Abgastemperaturwerte $T_A$ vorliegen werden, zuverlässig und schnell erkannt werden kann, ob ein Flammabbruch aufgetreten ist oder bevorsteht bzw. ob die Gefahr einer Überhitzung besteht.

In der Startphase, also zwischen den Zeitpunkten $t_1$ und $t_2$, wird die Flammabbruchsschwelle $S_F$ so gewählt, dass sie um einen vorgegebenen ersten Schwellendifferenzwert $\Delta T_F$ unter dem Abgastemperaturwert $T_A$ liegt. Die Flammabbruchsschwelle $S_F$ steigt also mit dem Abgastemperaturwert $T_A$ an und liegt am Ende dieser Startphase, also zu dem Zeitpunkt $t_2$, in welchem durch das Umschalten in eine Heizleistungsstufe mit niedrigerer Heizleistung in den normalen Betrieb übergangen wird, um diesen Schwellendifferenzwert $\Delta T_F$ unter dem zu diesem Zeitpunkt vorhandenen Abgastemperaturwert $T_A$. Im vorliegenden Falle, in welchem in der Startphase der Abgastemperaturwert $T_A$ stetig angestiegen ist, entspricht dieser Wert am Ende der Startphase, also zum Zeitpunkt $t_2$, dem in der Fig. 2 eingezeichneten Wert $T_R$, also einem Temperaturreferenzwert. Dieser am Ende der Startphase vorhandene Temperaturreferenzwert $T_R$ wird in der Ansteuervorrichtung 28 für den nachfolgenden Betrieb gespeichert bzw. zur weiteren Bearbeitung bereitgehalten.

In dem Falle, in welchem in der Startphase der Abgastemperaturwert $T_A$, möglicherweise bedingt durch äußere Einflüsse, nicht ständig ansteigt, sondern vorübergehend absinkt, dann aber wieder zunimmt, wird die Flammabbruchsschwelle $S_F$ nicht entsprechend abgesenkt. D.h., immer dann, wenn der Abgastemperaturwert $T_A$ vorübergehend absinkt, bleibt die Flammabbruchsschwelle auf einem konstanten Niveau und wird erst dann wieder erhöht, wenn der Abgastemperaturwert $T_A$ um ein dem ersten Schwellendifferenzwert $\Delta T_F$ entsprechendes Ausmaß über diesem Niveau der Flammabbruchsschwelle $S_F$ liegt. Erreicht der Abgastemperaturwert $T_A$ vor dem Ende der Startphase, also vor dem Übergehen in eine Heizleistungsstufe mit geringerer Heizleistung, einen Maximalwert und sinkt dann zum Ende der Startphase, möglicherweise wieder bedingt durch äußere Einflüsse, so kann der in der Startphase aufgetretene Maximalwert des Abgastemperaturwertes als der Temperaturreferenzwert $T_R$ herangezogen werden, welcher Wert dann höher sein kann, als der tatsächlich am Ende der Startphase vorhandene Abgastemperaturwert $T_A$.

Bei Übergang in den normalen Betrieb wird die Flammabbruchsschwelle $S_F$ dann beruhend auf dem Temperaturreferenzwert $T_R$, dem ersten Schwellendifferenzwert $\Delta T_F$ und einem für die dann gewählte Heizleistungsstufe vorgegebenen ersten Leistungsstufendifferenzwert $\Delta T_{FL}$ festgelegt. D.h., es werden von dem für den folgenden Betrieb dann im Wesentlichen unveränderlich vorgegebenen Temperaturreferenzwert $T_R$ der erste Schwellendifferenzwert $\Delta T_F$ und der erste Leistungsdifferenzwert $\Delta T_{FL1}$ für die Heizleistungsstufe 1 abgezogen. Diese Werte sind in der Fig. 2 durch die entsprechend bezeichneten Pfeile repräsentiert. Man erkennt, dass dies dazu führt, dass ab dem Zeitpunkt $t_2$ die Flammabbruchsschwelle $S_F$ um einen der Summe des ersten Schwellendifferenzwertes $\Delta T_F$ und des ersten Leistungsdifferenzwertes $\Delta T_{FL1}$ entsprechenden Betrag unter dem Temperaturreferenzwert $T_R$ liegt. Wie bereits erwähnt, wird dabei der der Heizleistungsstufe 1 zugeordnete erste Leistungsstufendifferenzwert $\Delta T_{FL1}$ so gewählt, dass die dann sich ergebende Flammabbruchsschwelle $S_F$ in definiertem Abstand zu der bei eingestellter Heizleistungsstufe 1 sich ergebenden Temperatur des Abgasstroms A liegt. Auf diese Art und Weise wird sichergestellt, dass einerseits ein korrekter Zusammenhang bzw. ein korrektes Verhältnis zwischen dem Abgastemperaturwert $T_A$ und der zugeordneten Flammabbruchsschwelle $S_F$ vorhanden ist, und dass andererseits diese Zuordnung aber auch unter Berücksichtigung der für ein speziell eingesetztes Heizgerät sich ergebenden Temperaturwerte bzw. der Temperaturmesswerte vorgegeben wird, nämlich dadurch, dass ein in der Erwärmungsphase auftretender Temperaturreferenzwert $T_R$ für den nachfolgenden Betrieb dann die Ausgangsbasis bildet, und zwar für jeden Startvorgang neu ermittelt.

Zu einem Zeitpunkt $t_4$ wird beispielsweise im Rahmen einer Zweipunktregelung dann die Heizleistungsstufe 2 übergangen, also eine Heizleistungsstufe, bei welcher eine höhere Heizleistung bereitgestellt wird, als in der Heizleistungsstufe 1. Auch für die Heizleistungsstufe 2 ist ein erster Leistungsstufendifferenzwert $\Delta T_{FL2}$ vorgegeben, der in Summe mit dem ersten Schwellendifferenzwert $\Delta T_F$ wieder den Abstand der für die Heizleistungsstufe 2 dann vorgegebenen Flammabbruchsschwelle $S_F$ von dem Temperaturreferenzwert $T_R$ repräsentiert. Auch dies ist in Fig. 2 deutlich erkennbar.

Man erkennt jedoch, dass der Fall auftreten kann, dass in dieser Phase die dann vorzusehende Flammabbruchsschwelle $S_F$ über dem Abgastemperaturwert $T_A$ liegt, der zum Zeitpunkt $t_4$, also zum Zeitpunkt des Übergangs in die Heizleistungsstufe 2, vorhanden ist. Würde zum Zeitpunkt $t_4$ direkt auf den neuen Wert der Flammabbruchsschwelle $S_F$ geschaltet werden, würde dies dann, wenn der Abgastemperaturwert $T_A$, als Vergleichswert bei der Flammüberwachung herangezogen wird, dazu führen, dass dieser Vergleichswert unter der zugeordneten Schwelle liegt. Dies hätte die Gefahr des Auslösens einer Flammabbruchserkennung zur Folge. Um dem entgegenzuwirken, kann vorgesehen sein, dass erst nach einem ersten Verzögerungszeitintervall $\Delta t_F$, al-

so zum Zeitpunkt $t_5$ nach dem Zeitpunkt $t_4$, die dann für die Heizleistungsstufe 2 vorzusehende Flammabbruchsschwelle $S_F$ gesetzt wird. Bis zu diesem Zeitpunkt $t_5$ kann noch die zuvor für die Heizleistungsstufe 1, also die Heizleistungsstufe mit geringerer Heizleistung, vorgesehene Flammabbruchsschwelle $S_F$ bzw. der hierfür vorgesehene Wert verbleiben. Um auch hier während des Temperaturanstiegs am Beginn der Heizleistungsstufe 2 die Flammabbruchsschwelle $S_F$ näher am Abgastemperaturwert $T_A$ zu führen, ist es denkbar, den Übergang zu dem Wert der Flammabbruchsschwelle $S_F$, wie er für die Heizleistungsstufe dann vorgesehen ist, rampenartig oder mit mehreren kleinen Stufen oder auch mit gekrümmtem Verlauf zu realisieren. In jedem Falle wird der für die Heizleistungsstufe mit höherer Heizleistung tatsächlich vorgesehene Wert der Flammabbruchsschwelle $S_F$ erst dann erreicht, wenn sichergestellt ist, dass eine durch ungünstige Positionierung der Schwelle generierte fehlerhafte Flammabbrucherkennung vermieden wird.

Der Vorgang des Hin- und Herschaltens zwischen verschiedenen Heizleistungsstufen wird sich im normalen Betrieb, also nach dem Zeitpunkt $t_2$, im Allgemeinen mehrfach wiederholen, wobei dann jeweils für die in verschiedenen Phasen ausgewählten Heizleistungsstufen geeignete Werte der Flammabbruchsschwelle $S_F$ durch die Miteinbeziehung eines jeweiligen ersten Leistungsstufendifferenzwertes erzeugt werden.

Um zu vermeiden, dass auf Grund irgendwelcher Fehler bei der Schwellenermittlung eine Flammabbrucherkennung überhaupt nicht realisiert werden kann, ist ein unterer Grenzwert $S_{Fmin}$ für die Flammabbruchsschwelle $S_F$ vorgegeben. Unter diesen Wert kann die Flammabbruchsschwelle nicht sinken bzw. wenn sie auf der Grundlage der vorangehend beschriebenen Ermittlungsmethode unter diesen Wert sinken würde, wird dieser untere Grenzwert $S_{Fmin}$ als Flammabbruchsschwelle $S_F$ verwendet. Am Beginn der Startphase, also unmittelbar folgend auf den Zeitpunkt $t_1$, wird der Abgastemperaturwert $T_A$ grundsätzlich auch unter diesem unteren Grenzwert liegen. Hier kann ein Zeitfenster definiert werden, in welchem ab Beginn der Startphase zunächst die Flammabbruchsüberwachung unterdrückt wird, um auch hier eine fehlerhafte Entscheidung zu vermeiden.

Der erste Schwellendifferenzwert $\Delta T_F$ kann, wie in der Fig. 2 dargestellt, als fest vorgegebener Wert verwendet werden, der dann für alle Heizleistungsstufen gleich ist. In diesem Falle können die für die jeweiligen verschiedenen Heizleistungsstufen im normalen Betrieb dann vorzusehenden Differenzen zwischen dem Temperaturwert $T_R$ und dem jeweils vorzusehenden Wert für die Flammabbruchsschwelle $S_F$ tatsächlich als ein einziger Betrag definiert werden und müssen nicht notwendigerweise als sich aus dem ersten Schwellendifferenzwert $\Delta T_F$ und dem ersten Leistungsdifferenzwert $\Delta T_{FL}$ zusammensetzend definiert werden. Es ist jedoch denkbar, für verschiedene Heizleistungsstufen auch verschiedene erste Schwellendifferenzwerte $\Delta T_F$ vorzugeben bzw. den ersten Schwellendifferenzwert $\Delta T_F$ auch temperaturabhängig zu gestalten, so dass beispielsweise dieser bei höheren Temperaturen größer ist, als bei niedrigeren Temperaturen des Abgasstroms.

In entsprechender Art und Weise, wie vorangehend mit Bezug auf die Flammabbruchsschwelle $S_F$ beschrieben, kann auch die Überhitzungsschwelle $S_Ü$ festgelegt werden. In der Startphase kann diese um einen zweiten Schwellendifferenzwert $\Delta T_Ü$ über dem Abgastemperaturwert $T_A$ liegen. In dem an die Startphase anschließenden Betrieb mit verschiedenen Heizleistungsstufen können dann in Zuordnung zu diesen verschiedenen Heizleistungsstufen zweite Leistungsstufendifferenzwerte $\Delta T_{ÜL}$ definiert werden, wobei auch hier als Ausgangswert der in der Startphase bzw. am Ende der Startphase ermittelte bzw. definierte Temperaturreferenzwert $\Delta T_R$ verwendet werden kann. D.h., die für eine jeweilige dann folgend eingesetzte Heizleistungsstufe vorzusehende Überhitzungsschwelle $S_Ü$ ist einerseits bezüglich des Temperaturreferenzwertes $T_R$ um den zweiten Leistungsstufendifferenzwert $\Delta T_{ÜL1}$ bzw. $\Delta T_{ÜL2}$ nach unten verschoben, ist dann jedoch um den zweiten Schwellendifferenzwert $\Delta T_Ü$ wieder nach oben verschoben, da sie letztendlich eine über dem Abgastemperaturwert $T_A$ liegende Schwelle definieren soll.

Würde hier bei dem Übergang in eine Heizleistungsstufe mit geringerer Heizleistung auch spontan wieder der jeweils zugeordnete Wert für die Überhitzungsschwelle $S_Ü$ gesetzt werden, so hätte dies beispielsweise zum Zeitpunkt $t_2$ zur Folge, dass der Abgastemperaturwert $T_A$ über dem Wert der Überhitzungsschwelle $S_Ü$ liegen würde mit der Folge, dass dann, wenn dieser Abgastemperaturwert $T_A$ als Vergeichswert heranzuziehen wäre, auf das Vorliegen einer Überhitzung zu erkennen wäre. Um dies zu vermeiden, kann auch hier wieder erst nach einem zweiten Verzögerungszeitintervall $\Delta t_Ü$ ein Übergang zu der für die dann vorliegende Heizleistungsstufe mit geringerer Heizleistung vorgesehene Überhitzungsschwelle $S_Ü$ erfolgen. Auch dies kann mit einer einzigen Stufe bzw. rampenartig, mit mehreren Stufen oder mit gekrümmtem Verlauf erfolgen, um ein fehlerhaftes Setzen dieser Überhitzungsschwelle $S_Ü$ unter den momentan vorhandenen Abgastemperaturwert $T_A$ zu vermeiden. Dies ist in Fig. 2 durch die schräg nach unten gestrichelt verlaufende Linie $L_1$ repräsentiert. Da grundsätzlich die Überhitzungsüberwachung jedoch auch reduziert werden kann darauf, dass das Erreichen einer bestimmten maximalen Grenztemperatur ermittelt wird, welche Temperatur dann tatsächlich zu Beschädigungen bzw. der Gefahr von Beschädigungen führt, kann auf das vorangehend erläuterte Nachführen der Überhitzungsschwelle $S_Ü$ verzichtet werden, wenn nur ein geringerer Verarbeitungsaufwand gewünscht ist. Dabei kann als so vorgegangen werden, dass, wie durch die Linie $L_2$ repräsentiert, am Ende der Startphase die Überhitzungsschwelle $S_Ü$ unverändert beibehalten wird, also grundsätzlich auf der Grundlage des Temperaturreferenzwertes $T_R$ und des zweiten Schwellendifferenzwertes $\Delta T_Ü$ festgelegt und auf diesem Wert gehalten wird. Auch auf diese Art und Weise kann dann eine Überhitzungsschwelle $S_{\ddot{U}}$ definiert werden, die grundsätzlich auch für jeden Neustart unter Berücksichtigung der in einem speziell betrachteten Heizgerät auftretenden Werte ermittelt wird.

Selbstverständlich ist es auch zur Definition der Überhitzungsschwelle $S_{\ddot{U}}$ möglich, den zweiten Schwellendifferenzwert $\Delta T_{\ddot{U}}$ als fest vorgegebenen Wert für alle Heizleistungsstufen zu verwenden. Alternativ kann auch hier mit einem in Abhängigkeit von der Heizleistungsstufe oder aber auch in Abhängigkeit von der Temperatur variierenden zweiten Schwellendifferenzwert gearbeitet werden.

Für die Überhitzungsschwelle So ist ein oberer Grenzwert $S_{\ddot{U}max}$ vorgegeben, welchen die Überhitzungsschwelle nicht überschreiten kann. Auf diese Art und Weise wird sichergestellt, dass auch bei fehlerhafter Ermittlung der Überhitzungsschwelle eine Überhitzungserkennung grundsätzlich stattfinden kann. Sowohl der untere Grenzwert $S_{Fmin}$ für die Flammabbruchsschwelle $S_F$ als auch der obere Grenzwert $S_{\ddot{U}max}$ für die Überhitzungsschwelle So können für einen jeweiligen Typ eines Heizgeräts 10 fest vorgegeben werden.

Um mit den vorangehend beschriebenen Schwellen die Flammabbruchsüberwachung bzw. die Überhitzungsüberwachung durchführen zu können, ist es noch erforderlich, diese Schwellen mit einem Vergleichswert zu vergleichen, so dass dann, wenn der Vergleichswert die Flammabbruchsschwelle unterschreitet, auch das Vorliegen bzw. die Gefahr eines Flammabbruchs erkannt werden kann, während dann, wenn die Überhitzungsschwelle überschritten wird, auch das Vorliegen bzw. die Gefahr einer Überhitzung, beispielsweise bedingt durch eine Strömungsverdämmung, also eine nicht ausreichende Wärmeabfuhr, geschlossen werden kann. Wie vorangehend bereits angedeutet, kann als Vergleichswert der Abgastemperaturwert $T_A$ herangezogen werden. Dies ist insbesondere unter Berücksichtigung der Tatsache, dass erfindungsgemäß die Schwellen so ermittelt werden, dass sie vergleichsweise nahe an den für verschiedene Betriebsphasen zu erwartenden Temperaturen liegen, vorteilhaft. Bei einer alternativen Variante wird es möglich, einen Temperaturtendenzwert zu verwenden, der unter der Berücksichtigung der Entwicklung des Abgastemperaturwertes $T_A$ in der Vergangenheit ermittelt wird. In der Fig. 3 sind in Zuordnung zu den drei Messkurven $m_1$, $m_2$ und $m_3$, welche jeweils für verschiedene Heizgeräte mit grundsätzlich gleichem Aufbau den Verlauf des Abgastemperaturwertes $T_A$ repräsentieren, jeweilige Tendenzwerte $T_{TW1}$, $T_{TW2}$ und $T_{TW3}$ dargestellt. Man erkennt, dass dort, wo die jeweiligen Messkurven vergleichsweise stark ansteigen, der jeweilige Temperaturtendenzwert $T_{TW}$ deutlich über diesen liegt, dass dort, wo die Messkurven eine vergleichsweise geringe Steigung haben, die Tendenzwerte $T_{TW}$ vergleichsweise nahe an den Messkurven liegen, und dass dort, wo die Messkurven vergleichsweise stark abfallen, die jeweiligen Tendenzwerte $T_{TW}$ deutlich unter den Messkurven liegen. Diese Temperaturtendenzwerte zeigen also jeweils an, in welcher Richtung sich momentan die Messkurve bzw. der Abgastemperaturwert $T_A$ entwickelt und sorgen dafür, dass bei Heranziehung dieser Temperaturtendenzwerte $T_{TW}$ als Vergleichswerte diese Entwicklung auch antizipierend bei der Flammabbruchsüberwachung bzw. der Überhitzungsüberwachung berücksichtigt wird. Beispielsweise kann ein derartiger Temperaturtendenzwert $T_{TW}$ berechnet werden als:

$$T_{TW} = T_A(n) + (T_A(n) - T_A(n-1)) \times B.$$

Dabei repräsentiert der Wert $T_A(n)$ den zum Zeitpunkt n gemessenen Wert des Abgastemperaturwertes. $T_A(n-1)$ repräsentiert den zum Zeitpunkt n-1, also bei der vorhergehenden Erfassung, ermittelten Wert des Abgastemperaturwertes. Durch die Berücksichtigung der Differenz und unter der Annahme, dass die einzelnen Erfassungen bzw. Abtastungen mit einer näherungsweise gleich bleibenden Abtastfrequenz erfolgen, enthält der Temperaturtendenzwert $T_{TW}$ also einen die Steigung jeweils berücksichtigenden Term, der durch einen Tendenzbewertungsfaktor B gewichtet wird. Je größer dieser Tendenzbewertungsfaktor B, desto stärker wird die jeweilige Steigung berücksichtigt. Dieser Tendenzbewertungsfaktor B kann also beispielsweise zuvor im Laborversuch in sinnvoller Art und Weise definiert werden und kann auch unter Berücksichtigung anderer Einflussgrößen, beispielsweise unter Berücksichtigung der Umgebungstemperatur variiert werden.

Es sei hier darauf hingewiesen, dass selbstverständlich andere Berechnungsformeln verwendet werden können, um einen derartigen Temperaturtendenzwert zu ermitteln, welcher die Entwicklung des Abgastemperaturwertes $T_A$ auch in der Vergangenheit berücksichtigt. Beispielsweise ist es auch möglich, mehr als nur zwei Abtastungen bei der Berechnung zu berücksichtigen, wobei beispielsweise weiter in der Vergangenheit liegende Ereignisse mit einem geringeren Tendenzbewertungsfaktor berücksichtigt werden können, als die jüngst vorliegenden Werte bzw. Änderungen des Abgastemperaturwertes.

Erreicht bzw. unterschreitet der jeweils ausgewählte Temperaturvergleichswert die Flammabbruchsschwelle, so ist dies ein Indiz dafür, dass die Temperatur der Verbrennungsabgase zu nieder wird und ein Flammabbruch aufgetreten ist oder kurz bevorsteht. Dies kann dann als Anlass für das Auslösen von Sicherheitsmaßnahmen verwendet werden. Beispielsweise kann eine Anzeige generiert werden bzw. es kann dann sofort die Zufuhr von Brennstoff unterbrochen werden, um eine Übersättigung des Brennerbereichs mit dann nicht mehr verbranntem Brennstoff zu vermeiden und somit die Bedingungen für einen Neustart günstiger zu gestalten.

Auch im Falle des Erreichens bzw. Überschreitens der Überhitzungsschwelle können entsprechende Maßnahmen ergriffen werden, um dafür zu sorgen, dass nicht durch eine zu geringe Wärmeabfuhr und einen ständigen Anstieg der Temperatur im Bereich des Heizgeräts Beschädigungen erzeugt werden. Um hier die Sicherheit bei der Erfassung derartiger problematischer Zustände zu erhöhen, ist es möglich, auf das Vorliegen eines derartigen kritischen Zustands erst dann zu schließen bzw. entsprechende Maßnahmen erst dann einzuleiten, wenn dieser Zustand mehrfach aufgetreten ist, wenn beispielsweise innerhalb der fünf oder zehn letzten Abtastungen mindestens drei Mal die jeweils vorgesehene Schwelle unter bzw. überschritten bzw. erreicht war.

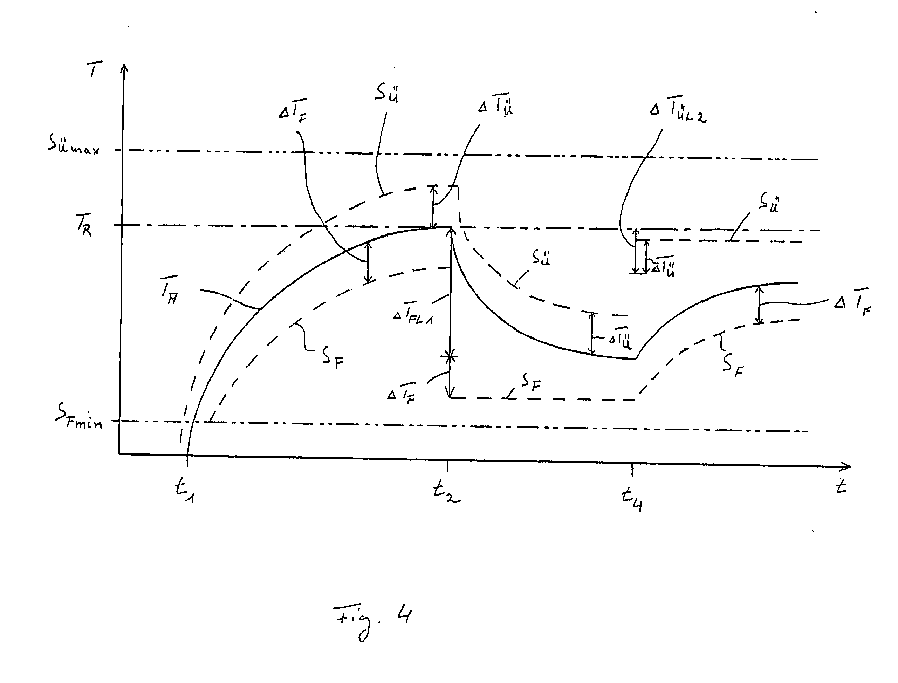

Eine alternative Vorgehensweise zur Ermittlung der Schwellen $S_F$ und So ist in Fig. 4 gezeigt. Man erkennt hier, dass nach dem Zeitpunkt $t_4$, also dem Übergang in eine Heizleistungsstufe mit höherer Heizleistung, ähnlich wie in der Startphase die Flammabbruchsschwelle $S_F$ so bestimmt wird, dass sie dem Verlauf des Abgastemperaturwertes $T_A$ folgt. Hier kann beispielsweise wieder so vorgegangen werden, dass die Flammabbruchsschwelle $S_F$ so bestimmt wird, dass sie um den ersten Schwellendifferenzwert $\Delta T_F$ unter dem Abgastemperaturwert $T_A$ liegt. Auf diese Art und Weise kann die vorangehend mit Bezug auf die Fig. 2 beschriebene Problematik, dass beim Übergang in eine Heizleistungsstufe mit höherer Heizleistung der Wert der Flammabbruchsschwelle $S_F$ über dem zu diesem Zeitpunkt vorhandenen Abgastemperaturwert $T_A$ liegt, grundsätzlich vermieden werden.

Es wird bei dieser Vorgehensweise also immer dann, wenn von einer Heizleistungsstufe mit geringerer Heizleistung, im Sinne der vorliegenden Erfindung einer zweiten Heizleistungsstufe, in eine Heizleistungsstufe mit höherer Heizleistung, im Sinne der vorliegenden Erfindung eine erste Heizleistungsstufe, übergegangen wird, die Flammabbruchsschwelle so definiert, dass sie mit vorbestimmtem Abstand dem Abgastemperaturwert $T_A$ folgt, mit diesem also ansteigt bzw. auf einem konstanten Niveau gehalten wird, wenn dieser abfällt bzw. vorübergehend abfällt. Hier ist es möglich, wie vorangehend bereits dargelegt, für verschiedene Heizleistungsstufen dann auch verschiedene erste Schwellendifferenzwerte vorzugeben. Beispielsweise kann für höhere Heizleistungsstufen ein höherer erster Schwellendifferenzwert vorgegeben werden, als für niedrigere Heizleistungsstufen. Immer dann, wenn von einer ersten Heizleistungsstufe, also einer Heizleistungsstufe mit höherer Heizleistung, in eine zweite Heizleistungsstufe übergegangen wird, also in eine Heizleistungsstufe mit geringerer Heizleistung übergegangen wird, kann dann die Flammabbruchsschwelle so wie in den Fig. 2 und 4 gezeigt ermittelt werden, also unter Berücksichtigung auch eines ersten Leistungsstufendifferenzwertes. Auch bei dieser Vorgehensweise kann jeweils in einer ersten Betriebsphase dafür gesorgt werden, dass dann, wenn der Abgastemperaturwert $T_A$ nicht steigt, sondern wieder sinkt, die an sich dem Abgastemperaturwert $T_A$ nachgeführte Flammabbruchsschwelle $S_F$ auf einem vor dem Absenken vorhandenen Niveau gehalten wird, um dann, wenn dieses Absinken des Abgastemperaturwertes $T_A$ tatsächlich durch einen Flammabbruch bzw. einen bevorstehenden Flammabbruch ausgelöst ist, dies tatsächlich auch erfassen zu können.

In ähnlicher Art und Weise kann auch bei der Festlegung der Überhitzungsschwelle $S_Ü$ vorgegangen werden, und zwar in Phasen, in welchen der Abgastemperaturwert $T_A$ sinkt. Hier kann, so wie auch in der Startphase, die Überhitzungsschwelle So dem dann sinkenden Abgastemperaturwert $T_A$ nachgeführt werden, und zwar beispielsweise wieder mit dem Abstand des zweiten Schwellendifferenzwertes $\Delta T_Ü$, wie in Fig. 4 in der an die Startphase anschließenden zweiten Betriebsphase zwischen den Zeitpunkten $t_2$ und $t_4$ veranschaulicht. Auf diese Art und Weise kann einerseits dafür gesorgt werden, dass immer dann, wenn in eine derartige zweite Betriebsphase, also eine Betriebsphase mit geringerer Heizleistung als in einer vorangehenden Phase, übergangen wird, einerseits die Überhitzungsschwelle $S_Ü$ möglichst nahe am Abgastemperaturwert $T_A$ liegt, andererseits aber auch durch das spontane Herabsetzen möglicherweise entstehende Probleme dadurch, dass die Schwelle dann unter dem Abgastemperaturwert liegt, vermieden werden. Wird von einer derartigen zweiten Betriebsphase dann in eine erste Betriebsphase, also eine Betriebsphase mit wieder höherer Heizleistung, übergegangen, so kann die Überhitzungsschwelle $S_Ü$ wieder so wie vorangehend beschrieben unter Berücksichtigung des Temperaturreferenzwertes $T_R$, des zweiten Schwellendifferenzwertes $\Delta T_Ü$ und des zweiten Leistungsstufendifferenzwertes $\Delta T_{ÜL}$ ermittelt werden, wie dies in der Fig. 4 ab dem Zeitpunkt $t_4$ für die Heizleistungsstufe 2 veranschaulicht ist.

Um auch bei dieser Vorgehensweise dafür zu sorgen, dass dann, wenn in der zweiten Betriebsphase, in welcher an sich die Temperatur der Abgase und somit der Abgastemperaturwert $T_A$ sinken sollte, dieser tatsächlich nicht sinkt, sondern wieder ansteigt, zuverlässig auch eine Überhitzung bzw. ein ungewöhnlicher Anstieg der Temperatur erkannt werden kann, kann vorgesehen sein, dass dann, wenn in einer derartigen zweiten Betriebsphase der Abgastemperaturwert $T_A$ wieder ansteigt, die Überhitzungsschwelle $S_Ü$ auf dem Niveau gehalten wird, das sie vor dem Wiederanstieg des Abgastemperaturwertes $T_A$ hatte. Sinkt dann der Abgastemperaturwert $T_A$, kann die Überhitzungsschwelle So wieder mit dem vorbestimmten Abstand des zweiten Schwellendifferenzwertes $\Delta T_Ü$ nachgeführt werden.

Mit der vorangehenden Vorgehensweise wird es also einerseits durch die Ermittlung jeweiliger Schwellen für die Flammüberwachung und die Überhitzungsüberwachung unter Berücksichtigung der in einem konkret eingesetzten Heizgerät auftretenden Temperaturen selbst möglich, die für den Betrieb vorgesehenen Schwellen sehr nahe an den zu erwartenden Temperaturwerten des Abgasstroms zu orientieren und somit auch sehr schnell auf das Vorliegen einer Überhitzung bzw. eines Flammabbruchs schließen zu können. Hierzu trägt auch eine sinnvolle Definition des mit den jeweiligen Schwellen zu vergleichenden Temperaturvergleichswertes bei. Es sei abschließend darauf hingewiesen, dass selbstverständlich nicht notwendigerweise bei ein- und demselben System beide Überwachungen mit den vorangehend beschriebenen Schwellen durchgeführt werden müssen, selbstverständlich kann bei einem System lediglich die Flammabbrucherkennung oder lediglich die Überhitzungserkennung realisiert sein. Selbstverständlich ist es auch möglich, für die Flammabbruchsüberwachung die Vorgehensweise der Fig. 2 zu verwenden, und für die Überhitzungsüberwachung die Vorgehensweise der Fig. 4 zu verwenden, und umgekehrt.

**Patentansprüche**

1. Verfahren zur Flammüberwachung bei einem brennstoffbetriebenen Heizgerät, insbesondere Fahrzeugheizgerät, welches Heizgerät (10) einen mit Brennstoff und Verbrennungsluft versorgten Brennerbereich (12) sowie einen Abgastemperatursensor (30) zur Bereitstellung eines die Abgastemperatur der bei der Verbrennung im Brennerbereich (12) entstehenden Abgase repräsentierenden Abgastemperaturwertes ($T_A$) aufweist, wobei das Verfahren zur Flammüberwachung ein Verfahren zur Flammabbruchüberwachung ist und folgende Maßnahmen umfasst:

   a) in einer Startphase, wiederholtes Ermitteln einer Flammabbruchsschwelle ($S_F$) beruhend auf dem wiederholt bereitgestellten Abgastemperaturwert ($T_A$) und einem ersten Schwellendifferenzwert ($\Delta T_F$),
   b) in einer an die Startphase anschließenden Betriebsphase, Ermitteln der Flammabbruchsschwelle ($S_F$) beruhend auf einem am Ende der Startphase vorhandenen Abgastemperaturwert ($T_A$) oder dem in der Startphase aufgetretenen höchsten Abgastemperaturwert als Temperaturreferenzwert ($T_R$), dem ersten Schwellendifferenzwert ($\Delta T_F$) und einem ersten Leistungsstufendifferenzwert ($\Delta T_{FL}$), wobei der erste Leistungsstufendifferenzwert ($\Delta T_{FL}$) in Abhängigkeit von der in der Betriebsphase eingestellten Heizleistungsstufe ausgewählt wird,
   c) Vergleichen eines Temperaturvergleichswertes ($T_A$; $T_{TW}$) mit der Flammabbruchsschwelle ($S_F$),
   d) dann, wenn der Temperaturvergleichswert ($T_A$; $T_{TW}$) die Flammabbruchsschwelle ($S_F$) erreicht oder unterschreitet, Erkennen eines Flammabbruchs oder eines bevorstehenden Flammabbruchs.

2. Verfahren nach Anspruch 1, **dadurch gekennzeichnet, dass** in der Startphase die Flammabbruchsschwelle ($S_F$) ermittelt wird als:

$$S_F = T_A - \Delta T_F$$

wobei

   $S_F$ = Flammabbruchsschwelle
   $T_A$ = Abgastemperaturwert
   $\Delta T_F$ = erster Schwellendifferenzwert.

3. Verfahren nach Anspruch 1 oder 2, **dadurch gekennzeichnet, dass** in der Betriebsphase die Flammabbruchsschwelle ($S_F$) ermittelt wird als:

$$S_F = T_R - \Delta T_F - \Delta T_{FL}$$

wobei

   $S_F$ = Flammabbruchsschwelle
   $T_R$ = Temperaturreferenzwert
   $\Delta T_F$ = erster Schwellendifferenzwert
   $\Delta T_{FL}$ = erster Leistungsstufendifferenzwert.

4. Verfahren nach einem der Ansprüche 1 bis 3, **dadurch gekennzeichnet, dass** dann, wenn ein Übergang von einer Heizleistungsstufe mit niedrigerer Heizleistung zu einer Heizleistungsstufe mit höherer Heizleistung stattfindet, die Flammabbruchsschwelle ($S_F$) erst nach Ablauf eines ersten Verzögerungszeitintervalls ($\Delta t_F$) nach dem Übergang in die Heizleistungsstufe mit höherer Heizleistung auf einen für die Heizleistungsstufe mit höherer Heizleistung vorgegebenen Wert gesetzt wird.

5. Verfahren zur Flammüberwachung bei einem brennstoffbetriebenen Heizgerät, insbesondere Fahrzeugheizgerät, welches Heizgerät (10) einen mit Brennstoff und Verbrennungsluft versorgten Brennerbereich (12) sowie einen Abgastemperatursensor (30) zur Bereitstellung eines die Abgastemperatur der bei der Verbrennung im Brennerbereich (12) entstehenden Abgase repräsentierenden Abgastemperaturwertes ($T_A$) aufweist, wobei das Verfahren zur Flammüberwachung ein Verfahren zur Flammabbruchüberwachung ist und folgende Maßnahmen umfasst:

   a) in einer Startphase und einer ersten Betriebsphase, in welcher die Heizleistung höher ist, als in einer vorangehenden Phase, wiederholtes Ermitteln einer Flammabbruchsschwelle ($S_F$) beruhend auf dem wiederholt bereitgestellten Abgastemperaturwert ($T_A$) und einem ersten Schwellendifferenzwert ($\Delta T_F$),

b) in einer zweiten Betriebsphase, in welcher die Heizleistung kleiner ist, als in einer vorangehenden Phase, Ermitteln der Flammabbruchsschwelle ($S_F$) beruhend auf einem am Ende der Startphase vorhandenen Abgastemperaturwert ($T_A$) oder dem in der Startphase aufgetretenen höchsten Abgastemperaturwert als Temperaturreferenzwert ($T_R$), dem ersten Schwellendifferenzwert ($\Delta T_F$) und einem ersten Leistungsstufendifferenzwert ($\Delta T_{FL}$), wobei der erste Leistungsstufendifferenzwert ($\Delta T_{FL}$) in Abhängigkeit von der in der Betriebsphase eingestellten Heizleistungsstufe ausgewählt wird,

c) Vergleichen eines Temperaturvergleichswertes ($T_A$; $T_{TW}$) mit der Flammabbruchsschwelle ($S_F$),

d) dann, wenn der Temperaturvergleichswert ($T_A$; $T_{TW}$) die Flammabbruchsschwelle ($S_F$) erreicht oder unterschreitet, Erkennen eines Flammabbruchs oder eines bevorstehenden Flammabbruchs.

6. Verfahren nach Anspruch 5,
**dadurch gekennzeichnet, dass** in der Startphase oder/und der ersten Betriebsphase die Flammabbruchsschwelle ($S_F$) ermittelt wird als:

$$S_F = T_A - \Delta T_F$$

wobei

$S_F$ = Flammabbruchsschwelle
$T_A$ = Abgastemperaturwert
$\Delta T_F$ = erster Schwellendifferenzwert.

7. Verfahren nach Anspruch 5 oder 6,
**dadurch gekennzeichnet, dass** in der zweiten Betriebsphase die Flammabbruchsschwelle ($S_F$) ermittelt wird als:

$$S_F = T_R - \Delta T_F - \Delta T_{FL}$$

wobei

$S_F$ = Flammabbruchsschwelle
$T_R$ = Temperaturreferenzwert
$\Delta T_F$ = erster Schwellendifferenzwert
$\Delta T_{FL}$ = erster Leistungsstufendifferenzwert.

8. Verfahren nach einem der Ansprüche 1 bis 7,

**dadurch gekennzeichnet, dass** in der Startphase oder/und einer ersten Betriebsphase dann, wenn der Abgastemperaturwert ($T_A$) sinkt, die Flammabbruchsschwelle ($S_F$) nicht gesenkt wird.

9. Verfahren nach einem der Ansprüche 1 bis 8,
**dadurch gekennzeichnet, dass** für die Flammabbruchsschwelle ($S_F$) ein unterer Schwellengrenzwert ($S_{Fmin}$) vorgegeben wird, und dass die Flammabbruchsschwelle ($S_F$) nicht unter den unteren Schwellengrenzwert ($S_{Fmin}$) gesenkt wird.

10. Verfahren nach einem der Ansprüche 1 bis 9,
**dadurch gekennzeichnet, dass** der erste Schwellendifferenzwert ($\Delta T_F$) unveränderbar ist.

11. Verfahren nach einem der Ansprüche 1 bis 10,
**dadurch gekennzeichnet, dass** der erste Schwellendifferenzwert ($\Delta T_F$) in Abhängigkeit von dem Abgastemperaturwert ($T_A$) oder/und der Heizleistungsstufe variabel ist.

12. Verfahren nach einem der Ansprüche 1 bis 11,
**dadurch gekennzeichnet, dass** in der Startphase oder/und der ersten Betriebsphase der Abgastemperaturwert ($T_A$) und die Flammabbruchsschwelle ($S_F$) mit vorbestimmter Wiederholungsrate ermittelt werden.

13. Verfahren zur Flammüberwachung bei einem brennstoffbetriebenen Heizgerät, insbesondere Fahrzeugheizgerät, welches Heizgerät (10) einen mit Brennstoff und Verbrennungsluft versorgten Brennerbereich (12) sowie einen Abgastemperatursensor (30) zur Bereitstellung eines die Abgastemperatur der bei der Verbrennung im Brennerbereich entstehenden Abgase repräsentierenden Abgastemperaturwertes (Tw) aufweist, wobei das Verfahren zur Flammüberwachung ein Verfahren zur Überhitzungsüberwachung ist und folgende Maßnahmen umfasst:

a) in einer Startphase, wiederholtes Ermitteln einer Überhitzungsschwelle ($S_o$), beruhend auf dem wiederholt bereitgestellten Abgastemperaturwert ($T_A$) und einem zweiten Schwellendifferenzwert ($\Delta T_Ü$),

b) in einer an die Startphase anschließenden Betriebsphase, Ermitteln der Überhitzungsschwelle ($S_Ü$) beruhend auf einem am Ende der Startphase vorhandenen Abgastemperaturwert ($T_A$) oder dem in der Startphase aufgetretenen höchsten Abgastemperaturwert als Temperaturreferenzwert ($T_R$) und dem zweiten Schwellendifferenzwert ($\Delta T_Ü$),

c) Vergleichen eines Temperaturvergleichswertes ($T_A$; $T_{TW}$) mit der Überhitzungsschwelle ($S_o$),

d) dann, wenn der Temperaturvergleichswert $(T_A; T_{TW})$ die Überhitzungsschwelle $(S_Ü)$ erreicht oder überschreitet, Erkennen einer Überhitzung oder einer bevorstehenden Überhitzung.

14. Verfahren nach Anspruch 13,
**dadurch gekennzeichnet, dass** bei der Maßnahme b) die Überhitzungsschwelle $(S_Ü)$ ferner beruhend auf einem zweiten Leistungsstufendifferenzwert $(\Delta T_{ÜL})$ ermittelt wird, wobei der zweite Leistungsstufendifferenzwert $(\Delta T_{ÜL})$ in Abhängigkeit von der in der Betriebsphase eingestellten Heizleistungsstufe ausgewählt wird.

15. Verfahren nach Anspruch 14,
**dadurch gekennzeichnet, dass** in der Startphase die Überhitzungsschwelle $(S_Ü)$ ermittelt wird als:

$$S_Ü = T_A + \Delta T_Ü$$

wobei

$S_Ü$ = Überhitzungsschwelle
$T_A$ = Abgastemperaturwert
$\Delta T_Ü$ = zweiter Schwellendifferenzwert.

16. Verfahren nach Anspruch 14 oder 15,
**dadurch gekennzeichnet, dass** in der Betriebsphase die Überhitzungsschwelle $(S_Ü)$ ermittelt wird als:

$$S_Ü = T_R + \Delta T_Ü - \Delta T_{ÜL}$$

wobei

$S_F$ = Überhitzungsschwelle
$T_R$ = Temperaturreferenzwert
$\Delta T_Ü$ = zweiter Schwellendifferenzwert
$\Delta T_{ÜL}$ = zweiter Leistungsstufendifferenzwert.

17. Verfahren nach einem der Ansprüche 14 bis 16,
**dadurch gekennzeichnet, dass** dann, wenn ein Übergang von einer Heizleistungsstufe mit höherer Heizleistung zu einer Heizleistungsstufe mit niedrigerer Heizleistung stattfindet, die Überhitzungsschwelle $(S_Ü)$ erst nach Ablauf eines zweiten Verzögerungszeitintervalls $(\Delta t_Ü)$ nach dem Übergang in die Heizleistungsstufe mit niedrigerer Heizleistung auf einen für die Heizleistungsstufe mit niedrigerer Heizleistung vorgesehenen Wert gesetzt wird.

18. Verfahren zur Flammüberwachung bei einem brennstoffbetriebenen Heizgerät, insbesondere Fahrzeugheizgerät, welches Heizgerät (10) einen mit Brennstoff und Verbrennungsluft versorgten Brennerbereich (12) sowie einen Abgastemperatursensor (30) zur Bereitstellung eines die Abgastemperatur der bei der Verbrennung im Brennerbereich entstehenden Abgase repräsentierenden Abgastemperaturwertes $(T_W)$ aufweist, wobei das Verfahren zur Flammüberwachung ein Verfahren zur Überhitzungsüberwachung ist und folgende Maßnahmen umfasst:

a) in einer Startphase und einer zweiten Betriebsphase, in welcher die Heizleistung kleiner ist, als in einer vorangehenden Phase, wiederholtes Ermitteln einer Überhitzungsschwelle $(S_Ü)$, beruhend auf dem wiederholt bereitgestellten Abgastemperaturwert $(T_A)$ und einem zweiten Schwellendifferenzwert $(\Delta T_Ü)$,
b) in einer ersten Betriebsphase, in welcher die Heizleistung höher ist, als in einer vorangehenden Phase, Ermitteln der Überhitzungsschwelle $(S_Ü)$ beruhend auf einem am Ende der Startphase vorhandenen Abgastemperaturwert $(T_A)$ oder dem in der Startphase aufgetretenen höchsten Abgastemperaturwert als Temperaturreferenzwert $(T_R)$, dem zweiten Schwellendifferenzwert $(\Delta T_Ü)$ und einem zweiten Leistungsstufendifferenzwert $(\Delta T_{ÜL})$, wobei der zweite Leistungsstufendifferenzwert $(\Delta T_{ÜL})$ in Abhängigkeit von der in der Betriebsphase eingestellten Heizleistungsstufe ausgewählt wird,
c) Vergleichen eines Temperaturvergleichswertes $(T_A; T_{TW})$ mit der Überhitzungsschwelle $(S_Ü)$,
d) dann, wenn der Temperaturvergleichswert $(T_A; T_{TW})$ die Überhitzungsschwelle $(S_O)$ erreicht oder überschreitet, Erkennen einer Überhitzung oder einer bevorstehenden Überhitzung.

19. Verfahren nach Anspruch 18,
**dadurch gekennzeichnet, dass** in der Startphase oder/und der zweiten Betriebsphase die Überhitzungsschwelle $(S_Ü)$ ermittelt wird als:

$$S_Ü = T_A + \Delta T_Ü$$

wobei

$S_Ü$ = Überhitzungsschwelle
$T_A$ = Abgastemperaturwert
$\Delta T_Ü$ = zweiter Schwellendifferenzwert.

20. Verfahren nach Anspruch 18 oder 19,
**dadurch gekennzeichnet, dass** in der ersten Betriebsphase die Überhitzungsschwelle $(S_Ü)$ ermittelt

wird als:

$$S_{\ddot{U}} = T_R + \Delta T_{\ddot{U}} - \Delta T_{\ddot{U}L}$$

wobei

$S_F$ = Überhitzungsschwelle
$T_R$ = Temperaturreferenzwert
$\Delta T_{\ddot{U}}$ = zweiter Schwellendifferenzwert
$AT_{\ddot{U}L}$ = zweiter Leistungsstufendifferenzwert.

21. Verfahren nach einem der Ansprüche 18 bis 20, **dadurch gekennzeichnet, dass** in der zweiten Betriebsphase dann, wenn der Abgastemperaturwert ($T_A$) ansteigt, die Überhitzungsschwelle ($S_{\ddot{U}}$) nicht erhöht wird.

22. Verfahren nach einem der Ansprüche 13 bis 21, **dadurch gekennzeichnet, dass** für die Überhitzungsschwelle ($S_{\ddot{U}}$) ein oberer Schwellengrenzwert ($S_{\ddot{U}max}$) vorgegeben wird und dass die Überhitzungsschwelle ($S_{\ddot{U}}$) nicht über den oberen Schwellengrenzwert ($S_{\ddot{U}max}$) erhöht wird.

23. Verfahren nach einem der Ansprüche 13 bis 22, **dadurch gekennzeichnet, dass** der zweite Schwellendifferenzwert ($\Delta T_{\ddot{U}}$) unveränderbar ist.

24. Verfahren nach einem der Ansprüche 13 bis 22, **dadurch gekennzeichnet, dass** der zweite Schwellendifferenzwert ($\Delta T_{\ddot{U}}$) in Abhängigkeit von dem Abgastemperaturwert ($T_A$) oder/und der Heizleistungsstufe veränderbar ist.

25. Verfahren nach einem der Ansprüche 13 bis 24, **dadurch gekennzeichnet, dass** in der Startphase oder/und der zweiten Betriepsphase der Abgastemperaturwert ($T_A$) und die Überhitzungsschwelle (So) mit vorbestimmter Wiederholungsrate ermittelt werden.

26. Verfahren nach einem der Ansprüche 1 bis 25, **dadurch gekennzeichnet, dass** der Temperaturvergleichswert ($T_A$) der Abgastemperaturwert ($T_A$) ist.

27. Verfahren nach einem der Ansprüche 1 bis 25, **dadurch gekennzeichnet, dass** der Temperaturvergleichswert ($T_{TW}$) beruhend auf einer Entwicklung des Abgastemperaturwertes ($T_A$) ermittelt wird.

28. Verfahren nach Anspruch 27, **dadurch gekennzeichnet, dass** der Temperaturvergleichswert ($T_{TW}$) ermittelt wird als:

$$T_{TW} = T_A(n) + (T_A(n) - T_A(n-1)) \times B$$

wobei

$T_{TW}$ = Temperaturtendenzwert als Temperaturvergleichswert
$T_A(n)$ = Abgastemperaturwert bei Ermittlung n
$T_A(n-1)$ = Abgastemperaturwert bei Ermittlung n-1
B = Tendenzbewertungsfaktor.

**Claims**

1. Method for flame monitoring in a fuel operated heating device, in particular a vehicle heating device, said heating device (10) comprising a burner section (12) provided with fuel and combustion air as well as an exhaust gas temperature sensor (30) for providing an exhaust gas temperature value ($T_A$) representing the exhaust gas temperature of the exhaust gases produced during combustion in the burner section (12), said method for flame monitoring being a method for the monitoring of flame interruption and comprising the following measures:

   a) during a starting phase repeated determination of a flame interruption threshold ($S_F$) on the basis of the repeatedly provided exhaust gas temperature value ($T_A$) and a first threshold difference value ($\Delta T_F$),
   b) during an operation phase following the starting phase determination of said flame interruption threshold ($S_F$) on the basis of an exhaust gas temperature value ($T_A$) observed at the end of said starting phase or the highest exhaust gas temperature value observed during the starting phase as temperature reference value ($T_R$), the first threshold difference value ($\Delta T_F$) and a first output level difference value ($\Delta T_{FL}$), said first output level difference value ($\Delta T_{FL}$) being selected depending on the heating output level adjusted during the operation phase,
   c) comparing a temperature reference value ($T_A$; $T_{TW}$) with said flame interruption threshold ($S_F$),
   d) when said temperature reference value ($T_A$; $T_{TW}$) reaches or falls below said flame interruption threshold ($S_F$) recognizing a flame interruption or a forthcoming flame interruption.

2. Method according to claim 1, **characterized by** said flame interruption threshold ($S_F$) being determined during the starting phase as:

$$S_F = T_A - \Delta T_F$$

with

S_F = flame interruption threshold
T_A = exhaust gas temperature value
ΔT_F = first threshold difference value.

3. Method according to claim 1 or 2,
**characterized by** said flame interruption threshold (S_F) being determined during the operation phase as:

$$S_F = T_R - \Delta T_F - \Delta T_{FL}$$

with

S_F = flame interruption threshold
T_R = temperature reference value
ΔT_F = first threshold difference value
ΔT_{FL} = first output level difference value.

4. Method according to one of claims 1 to 3,
**characterized in that**, when a transition takes place from one heating output level with a lower heating output to a heating output level with a higher heating output, said flame interruption threshold (S_F) is set to a value defined for the heating output level with a higher heating output only after expiry of a first delay time (ΔT_F) after the transition to the heating output level with a higher heating output.

5. A method for flame monitoring in a fuel operated heating device, in particular a vehicle heating device, said heating device (10) comprising a burner section (12) provided with fuel and combustion air as well as an exhaust gas temperature sensor (30) for providing an exhaust gas temperature value (T_A) representing the exhaust gas temperature of the exhaust gases produced during combustion in the burner section (12), said method for flame monitoring being a method for the monitoring of flame interruption and comprising the following measures:

a) during a starting phase and a first operation phase, where the heating output is higher than in a preceding phase, repeated determination of a flame interruption threshold (S_F) on the basis of the repeatedly provided exhaust gas temperature value (T_A) and a first threshold difference value (ΔT_F),
b) during a second operation phase, where the heating output is lower than in a preceding phase, determination of said flame interruption threshold (S_F) on the basis of an exhaust gas temperature value (T_A) observed at the end of said starting phase or the highest exhaust gas temperature value observed during the starting phase as temperature reference value (T_R), the first threshold difference value (ΔT_F) and a first output level difference value (ΔT_{FL}), said first output level difference value (ΔT_{FL}) being selected depending on the heating output level adjusted during the operation phase,
c) comparing a temperature reference value (T_A; T_{TW}) with said flame interruption threshold (S_F),
d) when said temperature reference value (T_A; T_{TW}) reaches or falls below said flame interruption threshold (S_F) recognizing a flame interruption or a forthcoming flame interruption.

6. Method according to claim 5,
**characterized by** said flame interruption threshold (S_F) being determined during the starting phase or/and the first operation phase as:

$$S_F = T_A - \Delta T_F$$

with

S_F = flame interruption threshold
T_A = exhaust gas temperature value
ΔT_F = first threshold difference value.

7. Method according to claim 5 or 6,
**characterized by** said flame interruption threshold (S_F) being determined during the second operation phase as:

$$S_F = T_R - \Delta T_F - \Delta T_{FL}$$

with

S_F = flame interruption threshold
T_R = temperature reference value
ΔT_F = first threshold difference value
ΔT_{FL} = first output level difference value.

8. Method according to claims 1 to 7,
**characterized in that** during the starting phase or/and a first operation phase, when said exhaust gas temperature value (T_A) decreases, said flame interruption threshold (S_F) is not reduced.

9. Method according to claims 1 to 8,
**characterized in** a lower threshold value (S_{Fmin}) being defined for said flame interruption threshold (S_F) and in said flame interruption threshold (S_F) not being brought below said lower threshold value ($S_{Fmin}$).

10. Method according to one of claims 1 to 9, **characterized in** said first threshold difference value ($\Delta T_F$) being non-variable.

11. Method according to one of claims 1 to 10, **characterized in** said first threshold difference value ($\Delta T_F$) being variable depending on said exhaust gas temperature value ($T_A$) or/and said heating output level.

12. Method according to claims 1 to 11, **characterized in that** during the starting phase or/and the first operation phase said exhaust gas temperature value ($T_A$) and said flame interruption threshold ($S_F$) are determined with a predefined repetition rate.

13. Method for flame monitoring in a fuel operated heating device, in particular a vehicle heating device, said heating device (10) comprising a burner section (12) provided with fuel and combustion air as well as an exhaust gas temperature sensor (30) for providing an exhaust gas temperature value ($T_A$) representing the exhaust gas temperature of the exhaust gases produced during combustion in the burner section, said method for flame monitoring being a method for the monitoring of overheating and comprising the following measures:

   a) during a starting phase repeated determination of an overheat threshold (So) on the basis of the repeatedly provided exhaust gas temperature value ($T_A$) and a second threshold difference value ($\Delta T_{\ddot{U}}$),
   b) during an operation phase following the starting phase determination of said overheat threshold (So) on the basis of an exhaust gas temperature value ($T_A$) observed at the end of said starting phase or the highest exhaust gas temperature value observed during the starting phase as temperature reference value ($T_R$) and the second threshold difference value ($\Delta T_{\ddot{U}}$),
   c) comparing a temperature reference value ($T_A$; $T_{TW}$) with said overheat threshold ($S_{\ddot{U}}$),
   d) when said temperature reference value ($T_A$; $T_{TW}$) reaches or exceeds said overheat threshold (So), recognizing an overheating or a forthcoming overheating.

14. Method according to claim 13, **characterized in that** with measure b) said overheat threshold (So) is furthermore determined on the basis of a second output level difference value ($\Delta T_{\ddot{U}L}$), said second output level difference value ($\Delta T_{\ddot{U}L}$) being selected depending on the heating output adjusted during the operation phase.

15. Method according to claim 14, **characterized by** said overheat threshold (So) being determined during the starting phase as:

$$S_{\ddot{U}} = T_A + \Delta T_{\ddot{U}}$$

with

   $S_{\ddot{U}}$ = overheat threshold
   $T_A$ = exhaust gas temperature value
   $\Delta T_{\ddot{U}}$ = second threshold difference value.

16. Method according to claim 14 or 15, **characterized by** said overheat threshold ($S_{\ddot{U}}$) being determined during the operation phase as:

$$S_{\ddot{U}} = T_R + \Delta T_{\ddot{U}} - \Delta T_{\ddot{U}L}$$

with

   $S_{\ddot{U}}$ = flame interruption threshold
   $T_R$ = temperature reference value
   $\Delta T_{\ddot{U}}$ = second threshold difference value
   $\Delta T_{\ddot{U}L}$ = second output level difference value.

17. Method according to one of claims 14 to 16, **characterized in that**, when a transition takes place from one heating output level with a higher heating output to a heating output level with a lower heating output, said overheat threshold (So) is set to a value defined for the heating output level with a lower heating output only after expiry of a second delay time ($\Delta T_{\ddot{U}}$) after the transition to the heating output level with a lower heating output.

18. Method for flame monitoring in a fuel operated heating device, in particular a vehicle heating device, said heating device (10) comprising a burner section (12) provided with fuel and combustion air as well as an exhaust gas temperature sensor (30) for providing an exhaust gas temperature value (Tw) representing the exhaust gas temperature of the exhaust gases produced during combustion in the burner section, said method for flame monitoring being a method for the monitoring of overheating and comprising the following measures:

   a) during a starting phase and a second operation phase, where the heating output is lower than during a preceding phase, repeated determination of an overheat threshold (So) on the basis of the repeatedly provided exhaust gas temperature value ($T_A$) and a second threshold

difference value ($\Delta T_{\ddot{U}}$),

b) during a first operation phase, where the heating output is higher than during a preceding phase, determination of said overheat threshold ($S_{\ddot{U}}$) on the basis of an exhaust gas temperature value ($T_A$) observed at the end of said starting phase or the highest exhaust gas temperature value observed during the starting phase as temperature reference value ($T_R$), the second threshold difference value ($\Delta T_{\ddot{U}}$) and a second output level difference value ($\Delta T_{\ddot{U}L}$), said second output level difference value ($\Delta T_{\ddot{U}L}$) being selected depending on the output level adjusted during the operation phase,

c) comparing a temperature reference value ($T_A$; $T_{TW}$) with said overheat threshold (So),

d) when said temperature reference value ($T_A$; $T_{TW}$) reaches or exceeds said Overheat threshold (So) recognizing an overheating or a forthcoming overheating.

19. Method according to claim 18,
**characterized in that** during the starting phase or/and the second operation phase said overheat threshold (So) is determined as:

$$S_{\ddot{U}} = T_A + \Delta T_{\ddot{U}}$$

with

$S_{\ddot{U}}$ = overheat threshold
$T_A$ = exhaust gas temperature value
$\Delta T_{\ddot{U}}$ = second threshold difference value.

20. Method according to claim 18 or 19,
in that during the first operation phase said overheat threshold (So) is determined as:

$$S_{\ddot{U}} = T_R + \Delta T_{\ddot{U}} - \Delta T_{\ddot{U}L}$$

with

$S_{\ddot{U}}$ = flame interruption threshold
$T_R$ = temperature reference value
$\Delta T_{\ddot{U}}$ = second threshold difference value
$\Delta T_{\ddot{U}L}$ = second output level difference value.

21. Method according to one of claims 18 to 20,
**characterized in that** during the second operation phase, when said exhaust gas temperature value ($T_A$) increases, said overheat threshold (So) is not increased.

22. Method according to one of claims 13 to 21,
**characterized by** an upper threshold value ($S_{\ddot{U}max}$) being provided for said overheat threshold (So) and by said overheat threshold (So) not being increased above the upper threshold value ($S_{\ddot{U}max}$).

23. Method according to one of claims 13 to 22,
**characterized by** said second threshold difference value ($\Delta T_{\ddot{U}}$) being non-variable.

24. Method according to one of claims 13 to 22,
**characterized by** said second threshold difference value ($\Delta T_{\ddot{U}}$) being variable depending on said exhaust gas temperature value ($T_A$) or/and said heating output level.

25. Method according to one of claims 13 to 24,
**characterized in that** during the starting phase or/and the second operation phase said exhaust gas temperature value ($T_A$) and said overheat threshold ($S_{\ddot{U}}$) are determined with a predefined repetition rate.

26. Method according to one of claims 1 to 25,
**characterized by** said temperature reference value ($T_{TW}$) being the exhaust gas temperature value ($T_A$).

27. Method according to one of claims 1 to 25,
**characterized by** said temperature reference value ($T_{TW}$) being determined on the basis of a development of said exhaust gas temperature value ($T_A$).

28. Method according to claim 27,
**characterized by** said temperature reference value ($T_{TW}$) being determined as:

$$T_{TW} = T_A(n) + T_A(n) - T_A(n-1)) \times B$$

with

$T_{TW}$ = Temperature trend value as temperature reference value
$T_A(n)$ = Exhaust gas temperature value for determination n
$T_A(n-1)$ = Exhaust gas temperature value for determination n-1
$B$ = Trend evaluation factor.

**Revendications**

1. Procédé de surveillance de flamme dans un dispositif de chauffage utilisant du combustible, en particulier un dispositif de chauffage de véhicule, ledit dispositif de chauffage (10) comprenant une section de brûleur (12) alimentée en combustible et en air de combustion ainsi qu'un capteur de température de gaz d'échappement (30) pour prévoir une valeur de température de gaz d'échappement ($T_A$) représentant la température de gaz d'échappement des gaz d'échappement produits lors de la combustion dans la section de brûleur (12), le procédé de surveillance de flamme étant un procédé de surveillance d'interruption de flamme et comprenant les mesures suivantes:

a) pendant une phase de démarrage, détermination répétée d'un seuil d'interruption de flamme ($S_F$) basée sur la valeur de température de gaz d'échappement ($T_A$) prévue de façon répétée et une première valeur de différence de seuil ($\Delta T_F$),

b) pendant une phase d'opération suivant la phase de démarrage, détermination du seuil d'interruption de flamme ($S_F$) basée sur une valeur de température de gaz d'échappement ($T_A$) présente à la fin de la phase de démarrage ou la valeur de température de gaz d'échappement la plus élevée observée pendant la phase de démarrage comme valeur de référence de température ($T_R$), la première valeur de différence de seuil ($\Delta T_F$) et une première valeur de différence des niveaux de puissance ($\Delta T_{FL}$), la première valeur de différence des niveaux de puissance ($\Delta T_{FL}$) étant choisie en fonction du niveau de puissance de chauffage ajusté pendant la phase d'opération,

c) comparer une valeur de référence de température ($T_A$; $T_{TW}$) au seuil d'interruption de flamme ($S_F$),

d) quand la valeur de référence de température ($T_A$; $T_{TW}$) atteint ou reste inférieur au seuil d'interruption de flamme ($S_F$), détecter une interruption de flamme ou une interruption de flamme imminente.

**2.** Procédé selon la revendication 1,
**caractérisé par** ledit seuil d'interruption de flamme ($S_F$) étant déterminé pendant la phase de démarrage par:

$$S_F = T_A - \Delta T_F$$

avec

$S_F$ = seuil d'interruption de flamme
$T_A$ = valeur de température de gaz d'échappement
$\Delta T_F$ = première valeur de différence des seuils.

**3.** Procédé selon la revendication 1 ou 2,
**caractérisé par** ledit seuil d'interruption de flamme ($S_F$) étant déterminé pendant la phase d'opération par:

$$S_F = T_R - \Delta T_F - \Delta T_{FL}$$

avec

$S_F$ = seuil d'interruption de flamme
$T_R$ = valeur de référence de température
$\Delta T_F$ = première valeur de différence des seuils
$\Delta T_{FL}$ = première valeur de différence des niveaux de puissance.

**4.** Procédé selon la revendication 1 à 3,
**caractérisé en ce que**, quand il y a une transition d'un niveau de puissance de chauffage avec une puissance de chauffage moins élevée à un niveau de puissance de chauffage avec une puissance de chauffage plus élevée, ledit seuil d'interruption de flamme ($S_F$) est amené à une valeur définie pour le niveau de puissance de chauffage avec une puissance de chauffage plus élevée seulement après écoulement d'un premier intervalle de délai ($\Delta T_F$) après la transition au niveau de puissance de chauffage avec une puissance de chauffage plus élevée.

**5.** Procédé de surveillance de flamme dans un dispositif de chauffage utilisant du combustible, en particulier un dispositif de chauffage de véhicule, ledit dispositif de chauffage (10) comprenant une section de brûleur (12) alimentée en combustible et en air de combustion ainsi qu'un capteur de température de gaz d'échappement (30) pour prévoir une valeur de température de gaz d'échappement ($T_A$) représentant la température du gaz d'échappement des gaz d'échappement produits lors de la combustion dans la section de brûleur (12), le procédé de surveillance de flamme étant un procédé de surveillance d'interruption de flamme et comprenant les mesures suivantes:

a) pendant une phase de démarrage et une première phase d'opération, pendant laquelle la puissance de chauffage est plus élevée que pendant une phase précédente, détermination répétée d'un seuil d'interruption de flamme ($S_F$) basée sur la valeur de température de gaz d'échappement ($T_A$) prévue de façon répétée et une première valeur de différence de seuil ($\Delta T_F$),

b) pendant une deuxième phase d'opération, pendant laquelle la puissance de chauffage est moins élevée que pendant une phase précédente, détermination du seuil d'interruption de flamme ($S_F$) basée sur une valeur de température de gaz d'échappement ($T_A$) présente à la fin de la phase de démarrage ou la valeur de température de gaz d'échappement la plus élevée observée pendant la phase de démarrage comme valeur de référence de température ($T_R$), la première valeur de différence de seuil ($\Delta T_F$) et une première valeur de différence des niveaux de puissance ($\Delta T_{FL}$), la première valeur de différence des niveaux de puissance ($\Delta T_{FL}$) étant choisie en fonction du niveau de puissance de chauffage ajusté pendant la phase d'opération,
c) comparer une valeur de référence de température ($T_A$; $T_{TW}$) au seuil d'interruption de flamme ($S_F$),
d) quand la valeur de référence de température ($T_A$; $T_{TW}$) atteint ou reste inférieur au seuil d'interruption de flamme ($S_F$), détecter une interruption de flamme ou une interruption de flamme imminente.

6. Procédé selon la revendication 5, **caractérisé par** ledit seuil d'interruption de flamme ($S_F$) étant déterminé pendant la phase de démarrage ou/et la première phase d'opération par:

$$S_F = T_A - \Delta T_F$$

avec

$S_F$ = seuil d'interruption de flamme
TA = valeur de température de gaz d'échappement
$\Delta T_F$ = première valeur de différence des seuils.

7. Procédé selon la revendication 5 ou 6, **caractérisé par** ledit seuil d'interruption de flamme ($S_F$) étant déterminé pendant la deuxième phase d'opération par:

$$S_F = T_R - \Delta T_F - \Delta T_{FL}$$

avec

$S_F$ = seuil d''interruption de flamme
$T_R$ = valeur de référence de température
$\Delta T_F$ = première valeur de différence des seuils
$\Delta T_{FL}$ = première valeur de différence des niveaux de puissance.

8. Procédé selon une des revendications 1 à 7, **caractérisé en ce que** pendant la phase de démarrage ou/et pendant une première phase d'opération, quand la valeur de température de gaz d'échappement ($T_A$) baisse, le seuil d'interruption de flamme ($S_F$) n'est pas réduit.

9. Procédé selon une des revendications 1 à 8, **caractérisé en ce qu'**une valeur de seuil inférieur ($S_{Fmin}$) est définie pour le seuil d'interruption de flamme ($S_F$) et **en ce que** le seuil d'interruption de flamme ($S_F$) n'est pas réduit en dessous du seuil inférieur ($S_{Fmin}$).

10. Procédé selon une des revendications 1 à 9, **caractérisé par** la première valeur de différence de seuil ($\Delta T_F$) étant invariable.

11. Procédé selon une des revendications 1 à 11, **caractérisé par** la première valeur de différence de seuil ($\Delta T_F$) étant variable en fonction de la valeur de température de gaz d'échappement ($T_A$) ou/et du niveau de puissance de chauffage.

12. Procédé selon une des revendications 1 à 10, **caractérisé en ce que** pendant la phase de démarrage ou/et la première phase d'opération la valeur de température de gaz d'échappement ($T_A$) et le seuil d'interruption de flamme ($S_F$) sont déterminés avec un taux de répétition prédéfini.

13. Procédé de surveillance de flamme dans un dispositif de chauffage utilisant du combustible, en particulier un dispositif de chauffage de véhicule, ledit dispositif de chauffage (10) comprenant une section de brûleur (12) alimentée en combustible et en air de combustion ainsi qu'un capteur de température de gaz d'échappement (30) pour prévoir une valeur de température de gaz d'échappement ($T_A$) représentant la température de gaz d'échappement des gaz d'échappement produits lors de la combustion dans la section de brûleur, le procédé de surveillance de flamme étant un procédé de surveillance de surchauffe et comprenant les mesures suivantes:

a) pendant une phase de démarrage, détermination répétée d'un seuil de surchauffe ($S_ü$) basée sur la valeur de température de gaz d'échappement ($T_A$) prévue de façon répétée et une deuxième valeur de différence de seuil ($\Delta T_ü$),
b) pendant une phase d'opération suivant la phase de démarrage, détermination du seuil de surchauffe ($S_ü$) basée sur une valeur de température de gaz d'échappement ($T_A$) présente à la fin de la phase de démarrage ou la valeur de température de gaz d'échappement la plus élevée observée pendant la phase de démarrage comme valeur de référence de température ($T_R$), et la deuxième valeur de différence de seuil ($\Delta T_ü$),
c) comparer une valeur de référence de température ($T_A$; $T_{TW}$) au seuil de surchauffe (So),
d) quand la valeur de référence de température ($T_A$; $T_{TW}$) atteint ou dépasse le seuil de sur-

chauffe ($S_\ddot{U}$), détecter une surchauffe ou une surchauffe imminente.

14. Procédé selon la revendication 13,
**caractérisé en ce que** lors de la mesure b) le seuil de surchauffe ($S_\ddot{U}$) est en outre déterminé sur la base d'une deuxième valeur de différence de niveaux de puissance ($\Delta T_{\ddot{U}L}$), ladite deuxième valeur de différence de niveaux de puissance ($\Delta T_{\ddot{U}L}$) étant choisie en fonction du niveau de puissance de chauffage ajusté pendant la phase d'opération.

15. Procédé selon la revendication 14,
**caractérisé par** ledit seuil de surchauffe (So) étant déterminé pendant la phase de démarrage par:

$$S_0 = T_A + \Delta T_0$$

avec

$S_\ddot{U}$ = seuil de surchauffe
$T_A$ = valeur de température de gaz d'échappement
$\Delta T_\ddot{U}$ = deuxième valeur de différence des seuils.

16. Procédé selon la revendication 14 ou 15,
**caractérisé par** ledit seuil de surchauffe ($S_\ddot{U}$) étant déterminé pendant la phase d'opération par:

$$S_0 = T_R + \Delta T_0 - \Delta T_{0L}$$

avec

So = seuil de surchauffe
$T_R$ = valeur de référence de température
$\Delta T_\ddot{U}$ = deuxième valeur de différence des seuils
$\Delta T_{\ddot{U}L}$ = deuxième valeur de différence des niveaux de puissance

17. Procédé selon une des revendications 14 à 16,
**caractérisé en ce que**, quand il y a une transition d'un niveau de puissance de chauffage avec une puissance de chauffage plus élevée à un niveau de puissance de chauffage avec une puissance de chauffage moins élevée, ledit seuil d'interruption de flamme ($S_\ddot{U}$) est amené à une valeur définie pour le niveau de puissance de chauffage avec une puissance de chauffage moins élevée seulement après écoulement d'un deuxième intervalle de délai ($\Delta T_\ddot{U}$) après la transition au niveau de puissance de chauffage avec une puissance de chauffage moins élevée.

18. Procédé de surveillance de flamme dans un dispositif de chauffage utilisant du combustible, en particulier un dispositif de chauffage de véhicule, ledit dispositif de chauffage (10) comprenant une section de brûleur (12) alimentée en combustible et en air de combustion ainsi qu'un capteur de température de gaz d'échappement (30) pour prévoir une valeur de température de gaz d'échappement ($T_w$) représentant la température de gaz d'échappement des gaz d'échappement produits lors de la combustion dans la section de brûleur, le procédé de surveillance de flamme étant un procédé de surveillance de surchauffe et comprenant les mesures suivantes:

a) pendant une phase de démarrage et une deuxième phase d'opération, pendant laquelle la puissance de chauffage est moins élevée que pendant une phase précédente, détermination répétée d'un seuil de surchauffe ($S_\ddot{U}$) basée sur la valeur de température de gaz d'échappement ($T_A$) prévue de façon répétée et une deuxième valeur de différence de seuil ($\Delta T_\ddot{U}$),
b) pendant une première phase d'opération, pendant laquelle la puissance de chauffage est plus élevée que pendant une phase précédente, détermination du seuil de surchauffe ($S_\ddot{U}$) basée sur une valeur de température de gaz d'échappement ($T_A$) présente à la fin de la phase de démarrage ou la valeur de température de gaz d'échappement la plus élevée observée pendant la phase de démarrage comme valeur de référence de température ($T_R$), la deuxième valeur de différence de seuil ($\Delta T_\ddot{U}$) et une deuxième valeur de différence de niveaux de puissance ($\Delta T_{\ddot{U}L}$), la deuxième valeur de différence de niveaux de puissance ($\Delta T_{\ddot{U}L}$) étant choisie en fonction du niveau du puissance de chauffage ajusté pendant la phase d'opération,
c) comparer une valeur de référence de température ($T_A$; $T_{TW}$) au seuil de surchauffe (So),
d) quand la valeur de référence de température ($T_A$; $T_{TW}$) atteint ou dépasse le seuil de surchauffe ($S_\ddot{U}$), détecter une surchauffe ou une surchauffe imminente.

19. Procédé selon la revendication 18,
**caractérisé par** ledit seuil de surchauffe ($S_\ddot{U}$) étant déterminé pendant la phase de démarrage ou/et la deuxième phase d'opération par:

$$S_0 = T_A + \Delta T_0$$

avec

$S_\ddot{U}$ = seuil de surchauffe
$T_A$ = valeur de température de gaz d'échappement

$\Delta T_{\ddot{U}}$ = deuxième valeur de différence des seuils.

20. Procédé selon la revendication 18 ou 19, **caractérisé par** ledit seuil de surchauffe ($S_{\ddot{U}}$) étant déterminé pendant la première phase d'opération par:

$$S_0 = T_R + \Delta T_0 - \Delta T_{0L}$$

avec

So = seuil de surchauffe
$T_R$ = valeur de référence de température
$\Delta T_{\ddot{U}}$ = deuxième valeur de différence des seuils
$\Delta T_{\ddot{U}L}$ = deuxième valeur de différence des niveaux de puissance.

21. Procédé selon une des revendications 18 à 20, **caractérisé en ce que**, pendant la deuxième phase d'opération, quand la valeur de température de gaz d'échappement ($T_A$) augmente, le seuil de surchauffe ($S_{\ddot{U}}$) n'est pas augmenté.

22. Procédé selon une des revendications 13 à 21, **caractérisé en ce qu'**une valeur de seuil supérieure ($S_{\ddot{U}max}$) est prévue pour le seuil de surchauffe ($S_{\ddot{U}}$) et **en ce que** le seuil de surchauffe ($S_{\ddot{U}}$) n'est pas augmenté en dessus de la valeur de seuil supérieure ($S_{\ddot{U}max}$).

23. Procédé selon une des revendications 13 à 22, **caractérisé par** la deuxième valeur de différence de seuil ($\Delta T_{\ddot{U}}$) étant invariable.

24. Procédé selon une des revendications 13 à 22, **caractérisé par** la deuxième valeur de différence de seuil ($\Delta T_{\ddot{U}}$) étant variable en fonction de la valeur de température de gaz d'échappement ($T_A$) ou/et du niveau de puissance de chauffage.

25. Procédé selon une des revendications 13 à 24, **caractérisé en ce que** pendant la phase de démarrage ou/et pendant la deuxième phase d'opération, la valeur de température de gaz d'échappement ($T_A$) et le seuil de surchauffe (So) sont déterminés avec un taux de répétition prédéfini.

26. Procédé selon une des revendications 1 à 25, **caractérisé par** la valeur de référence de température (Tw) étant la valeur de température de gaz d'échappement ($T_A$).

27. Procédé selon une des revendications 1 à 25, **caractérisé par** la valeur de référence de température ($T_{TW}$) étant déterminée sur la base d'un développement de la valeur de température de gaz d'échappement ($T_A$).

28. Procédé selon la revendication 27, **caractérisé par** la valeur de référence de température ($T_{TW}$) étant déterminée par:

$$T_{TW} = T_A(n) + T_A(n) - T_A(n-1)) \times B$$

avec

$T_{TW}$ = Valeur de tendance de température en tant que valeur de référence de température
$T_A(n)$ = Valeur de température de gaz d'échappement ($T_A$) pour la détermination n
$T_A(n-1)$ = Valeur de température de gaz d'échappement ($T_A$) pour la détermination n-1
B = Facteur d'évaluation de la tendance.

Fig. 1

Fig. 2

Zeit in sec

T in °C

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0346829 A1
- DE 19524260 A1